(19) **Europäisches Patentamt**
**European Patent Office**
**Office européen des brevets**

(11) **EP 4 163 842 A1**

(12) **EUROPEAN PATENT APPLICATION**

(43) Date of publication:
**12.04.2023 Bulletin 2023/15**

(21) Application number: **22199988.1**

(22) Date of filing: **06.10.2022**

(51) International Patent Classification (IPC):
**G06N 20/00** (2019.01)    **G06N 3/044** (2023.01)

(52) Cooperative Patent Classification (CPC):
**G06N 3/044; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.10.2021 US 202163253365 P**
**15.08.2022 JP 2022129410**

(71) Applicant: **FUJITSU LIMITED**
**Kawasaki-shi, Kanagawa 211-8588 (JP)**

(72) Inventors:
- **MOUSAVI, Seyed Farzad**
**Toronto, Ontario, M5S 1A1 (CA)**
- **SHEIKHOLESLAMI, Ali**
**Toronto, Ontario, M5S 1A1 (CA)**

(74) Representative: **Hoffmann Eitle**
**Patent- und Rechtsanwälte PartmbB**
**Arabellastraße 30**
**81925 München (DE)**

(54) **COMPUTER PROGRAM, DATA PROCESSING APPARATUS, AND DATA PROCESSING METHOD**

(57)    A first storage unit holds the values of discrete variables included in an evaluation function and the values of local fields for each replica. A second storage unit provided for each replica holds the values of corresponding discrete variables and local fields. A processing unit repeats, for each replica, a process of updating the value of any discrete variable, the value of the evaluation function, and the values of the local fields on the basis of a set temperature and the values of the local fields stored in the second storage unit, and after every predetermined number of iterations, performs resampling of population annealing. When a first replica is duplicated to create a second replica, the processing unit reads the values of the discrete variables and local fields of the first replica from the first storage unit and stores them in the second storage unit for the second replica.

FIG. 5

## Description

FIELD

The embodiment discussed herein relates to a computer program, a data processing apparatus, and a data processing method.

BACKGROUND

Markov Chain Monte Carlo (MCMC) algorithms are widely used in discrete optimization, machine learning, medical applications, statistical physics, and others. Additionally, MCMC algorithms are used in a simulated annealing method, an annealed importance sampling method, a parallel tempering method (also called a replica exchange method), a population annealing method, and others (see, for example, Non-Patent Literatures 1 to 6). Among these, the population annealing method is suitable for searching for solutions to large-scale combinatorial optimization problems with parallel hardware (see, for example, Non-Patent Literatures 7 and 8).

The population annealing method performs annealing (with gradually lowering the temperature), as in the simulated annealing method. However, on the basis of the solution search results respectively obtained for a plurality of replicas of a Boltzmann machine every predetermined period of time, the population annealing method obtains the weight (evaluation value) of each replica. Replicas with small evaluation values are eliminated, and replicas with high evaluation values are duplicated (split). Then, the search is repeated. A process of eliminating replicas on the basis of evaluation values and making duplications in this way is called a resampling process.

In this connection, MCMC algorithms may be used for sampling from the Boltzmann distributions of Boltzmann machines at low temperatures for the purpose of solving optimization problems or spin glass simulations (see, for example, Non-Patent Literature 9). One of main factors that adversely affect the performance of Boltzmann machines is rejection of proposed state transitions (may be referred to as MCMC moves, hereafter). Especially, in the case of sampling from rough distributions, many proposed MCMC moves are rejected. In this case, the states remain unchanged and thus a significant amount of computational time is wasted.

To address this issue, two parallel MCMC algorithms have been proposed: a uniform selection MCMC algorithm (see, for example, Non-Patent Literature 1); and a jump MCMC algorithm (see, for example, Non-Patent Literature 10). Instead of proposing a single MCMC move and accepting or rejecting the proposal, these algorithms evaluate several potential MCMC moves in parallel in order to increase the probability of accepting at least one MCMC move. When implemented in parallel hardware, these algorithms exhibit significant speedups especially at low temperatures where the acceptance rate is low.

(Non-Patent Literature 1) M. Aramon et al., "Physics-inspired optimization for quadratic unconstrained problems using a digital annealer", Frontiers in Physics, vol. 7, Article 48, 2019

(Non-Patent Literature 2) M. Bagherbeik et al., "A permutational Boltzmann machine with parallel tempering for solving combinatorial optimization problems", In International Conference on Parallel Problem Solving from Nature, pp.317-331, Springer, 2020

(Non-Patent Literature 3) S. Kirkpatrick, C. D. Gelatt, and M. P. Vecchi, "Optimization by simulated annealing", Science, vol. 220, no. 4598, pp. 671-680, 1983

(Non-Patent Literature 4) R. M. Neal, "Annealed importance sampling", Statistics and Computing, vol. 11, no. 2, pp. 125-139, 2001

(Non-Patent Literature 5) K. Hukushima and K. Nemoto, "Exchange Monte Carlo method and application to spin glass simulations", Journal of the Physical Society of Japan, vol. 65, no. 6, pp. 1604-1608, 1996

(Non-Patent Literature 6) K. Hukushima and Y. Iba, "Population annealing and its application to a spin glass," AIP Conference Proceedings, vol. 690, no. 1, pp. 200-206, 2003

(Non-Patent Literature 7) W. Wang, J. Machta, and H. Katzgraber, "Comparing Monte Carlo methods for finding ground states of Ising spin glasses: Population annealing, simulated annealing, and parallel tempering", Physical Review E, vol. 92, 12 2015

(Non-Patent Literature 8) L. Y. Barash et al., "GPU accelerated population annealing algorithm", Computer Physics Communications, vol. 220, pp. 341-350, 2017

(Non-Patent Literature 9) K. Dabiri et al., "Replica exchange MCMC hardware with automatic temperature selection and parallel trial", IEEE Transactions on Parallel and Distributed Systems, vol. 31, no. 7, pp. 1681-1692, 2020

(Non-Patent Literature 10) J. S. Rosenthal et al., "Jump Markov chains and rejection-free metropolis algorithms", arXiv:1910.13316, 2020

There is a high computational cost problem in searching for solutions to large-scale combinatorial optimization problems using the population annealing method because this needs a large number of replicas.

SUMMARY

According to one aspect, the present disclosure intends to provide a computer program, data processing apparatus, and data processing method that are able to reduce the computational cost.

According to one aspect, there is provided a computer program that causes a computer to perform a process including: storing, in first storage means, values of a plurality of discrete variables included in an evaluation function of a Boltzmann machine to which a combinatorial optimization problem is transformed, and values of a plurality of local fields with respect to each of a plurality of replicas for the Boltzmann machine, the plurality of local fields each representing a change occurring in a value of the evaluation function when a value of one of the plurality of discrete variables is changed; storing, in second storage means provided for each of the plurality of replicas, the values of the plurality of discrete variables and the values of the plurality of local fields with respect to the each of the plurality of replicas; repeating, for each of the plurality of replicas, an update process of updating a value of one of the plurality of discrete variables, the value of the evaluation function, and the values of the plurality of local fields, based on a set value of a temperature parameter and the values of the plurality of local fields stored in the second storage means; and each time a number of iterations of the update process reaches a predetermined value, performing a resampling process of a population annealing method, based on the values of the plurality of discrete variables of the plurality of replicas and values of the evaluation function of the plurality of replicas, and reading, in response to a second replica being created by duplicating a first replica among the plurality of replicas in the resampling process, the values of the plurality of discrete variables of the first replica and the values of the plurality of local fields of the first replica from the first storage means or the second storage means provided for the first replica, and storing the read values of the plurality of discrete variables and the read values of the plurality of local fields in the second storage means provided for the second replica.

BRIEF DESCRIPTION OF DRAWINGS

FIGS. 1A to 1F illustrate examples of Boltzmann distributions at different temperatures;
FIG. 2 illustrates an example of a Markov chain Monte Carlo (MCMC) algorithm for a Boltzmann machine;
FIG. 3 illustrates an example of an overall algorithm for a population annealing method;
FIG. 4 illustrates an example of an algorithm for a resampling process;
FIG. 5 illustrates an example of a data processing apparatus according to the present embodiment, which searches for a solution to a combinatorial optimization problem using the population annealing method;
FIG. 6 is a flowchart illustrating an example of a procedure for a solution search process using the population annealing method;
FIG. 7 is a flowchart illustrating an example of a procedure for the resampling process;
FIG. 8 illustrates an example of acceptance rate of an MCMC simulation on a Max-Cut problem;
FIG. 9 illustrates an example of a parallel reduction tree;
FIG. 10 illustrates an example of a sequential selection MCMC algorithm;
FIG. 11 illustrates an example of a parallel minimum reduction tree;
FIG. 12 is a flowchart illustrating an example of a procedure for the sequential selection MCMC algorithm;
FIG. 13 illustrates an example of GPU implementation;
FIG. 14 illustrates an example of executing threads in a thread block;
FIGS. 15A to 15C illustrate examples of experimental results of an energy histogram of samples for a uniform selection MCMC algorithm, a sequential selection MCMC algorithm, and a jump MCMC algorithm;
FIG. 16 illustrates an example of calculation results of an average error for the uniform selection MCMC algorithm, jump MCMC algorithm, and sequential selection MCMC algorithm;
FIG. 17 illustrates an example of clusters;
FIG. 18 illustrates an example of a clustering algorithm;
FIG. 19 is a flowchart illustrating an example of a procedure for clustering;
FIGS. 20A and 20B illustrate examples of a weight coefficient matrix before and after clustering;
FIG. 21 illustrates an example of a clustered sequential selection MCMC algorithm;
FIG. 22 is a flowchart illustrating an example of a procedure for the clustered sequential selection MCMC algorithm;
FIG. 23 is a flowchart illustrating an example of a procedure for an intra-cluster parallel update process;
FIG. 24 illustrates simulation results of a Max-Cut problem using clustered and non-clustered sequential selection MCMC algorithms;
FIG. 25 illustrates simulation results for the performance of a simulated annealing method (SA), a parallel tempering method (PT), and a population annealing method (PA) on a quadratic assignment problem (QAP);

FIG. 26 illustrates the relationship between temperature ladder size and success probability in PT;

FIG. 27 illustrates simulation results for the performance of SA, PT, and PA on a Max-Cut problem (G33);

FIG. 28 illustrates simulation results for the performance of SA, PT, and PA on a Max-Cut problem (G53);

FIG. 29 illustrates simulation results for the performance of SA, PT, and PA on a traveling salesman problem (TSP);

FIG. 30 illustrates an example of a parallel population-based Boltzmann machine (PBBM) algorithm;

FIG. 31 illustrates the relationship between runtime for $10^5$ MCMC iterations per replica and population size;

FIG. 32 illustrates the peak number of MCMC iterations that may be run in a second in the whole population;

FIG. 33 illustrates calculation results for the speedup of PBBM (GPU-implementation) against other solvers;

FIG. 34 illustrates a comparison result of accuracy of type 1 solvers;

FIG. 35 illustrates a comparison result of accuracy of type 2 solvers; and

FIG. 36 illustrates an example of hardware of a computer that is an example of the data processing apparatus.

DESCRIPTION OF EMBODIMENTS

One embodiment will be described with reference to the accompanying drawings.

A data processing apparatus according to the present embodiment transforms a combinatorial optimization problem to a Boltzmann Machine evaluation function and searches for a solution. As the evaluation function, a quadratic unconstrained binary optimization (QUBO) evaluation function (also called an energy function) defined by equation (1) may be used.

$$E(\mathbf{x}) = -\sum_{i=1}^{N}\sum_{j=1}^{i-1} w_{ij}x_i x_j - \sum_{i=1}^{N} b_i \qquad (1)$$

The thick letter x in equation (1) is a vector with N discrete variables (binary variables with either 0 or 1). This vector is also called a state vector and represents the state of a QUBO model. In the following, x may be referred to as a state, simply. In equation (1), $w_{i,j}$ denotes a coefficient (hereinafter, referred to as a weight coefficient) representing a weight or the intensity of coupling between discrete variables $x_i$ and $x_j$. Here, $x_{i,j} = 0$ indicates no coupling between $x_i$ and $x_j$. $b_i$ denotes a bias coefficient, and there are N bias coefficients $b_i$ respectively corresponding to the discrete variables.

Searching for a solution to a combinatorial optimization problem is equivalent to searching for a state of a QUBO model that has the minimum value of the evaluation function defined by equation (1). The value of the evaluation function corresponds to energy. Using the evaluation function with the signs changed; plus changed to minus or minus to plus, the QUBO model may be designed to search for a state that maximizes the value of the evaluation function.

The QUBO model is equivalent to an Ising model, and these models are mutually transformable easily (see, for example, Andrew Lucas, "Ising formulations of many NP problems", Frontiers in Physics, vol.2, article 5, Feb 2014).

A variety of real-world problems may be formulated to QUBO models. QUBO models are good compatible with hardware and are suitably used for accelerating a solution search in hardware.

In addition, the data processing apparatus according to the present embodiment implements the Boltzmann machine's function. A Boltzmann machine will now be described.

(Boltzmann Machine)

A Boltzmann machine is a recurrent neural network with all-to-all connectivity and may use a QUBO energy function. Each Boltzmann machine has a Boltzmann distribution that represents the probability of each state represented by an above-described state vector. The Boltzmann distribution is given by equation (2).

$$\pi_\beta(\mathbf{x}) = \frac{1}{Z_\beta} exp(-\beta E(\mathbf{x})) \qquad (2)$$

In equation (2), $\beta$ is 1/T (T is a temperature) and is called the inverse temperature of the Boltzmann machine. $Z_\beta$ is a partition function given by equation (3).

$$Z_\beta = \sum_{\mathbf{x}} exp(-\beta E(\mathbf{x})) \tag{3}$$

The values of the partition function at different temperatures are used in spin glass simulations in statistical physics. However, since calculating $Z_\beta$ has a complexity of the order of $O(2^N)$, it is infeasible for thousands of discrete variables in calculation. Hence, a Monte Carlo algorithm is used to extract samples from the Boltzmann distribution and estimate the partition function.

Sampling from a Boltzmann distribution is also an approach that is used to search for a solution to a combinatorial optimization problem. As the temperature decreases ($\beta$ increases), a global minimum state starts to dominate the Boltzmann distribution. Hence, the global minimum state has a higher probability than any other state and is more likely to be observed among the samples taken from the Boltzmann distribution.

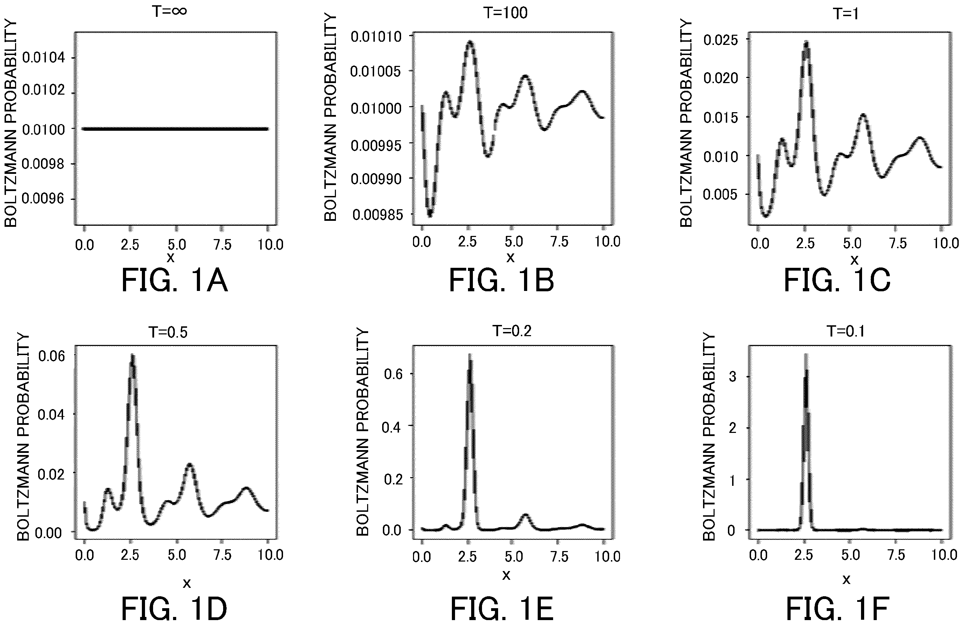

FIGS. 1A to 1F illustrate examples of Boltzmann distributions at different temperatures. In FIGS. 1A to 1F, an energy function, $E(x) = e^{-0.3x}\sin4x + e^{-0.2x}\sin2x$, is used in equation (3). The horizontal axis represents the value of x, whereas the vertical axis represents Boltzmann probability.

The distribution is flatter at higher temperature, and the local maximum and minimum values are magnified at lower temperature. At the lowest temperature, the global minimum state (global maximum in the Boltzmann distribution) dominates the Boltzmann distribution.

When sampling from a Boltzmann distribution, a Markov chain Monte Carlo (MCMC) algorithm inverts (flips) the value of a discrete variable in order to move from a certain state to another that has a Hamming distance of one from the certain state. This flip is accepted with a probability calculated by equation (4) using the Metropolis acceptance rule.

$$T(\mathbf{x}'|\mathbf{x}) = min\{1, e^{-\beta \Delta E_j(\mathbf{x})}\} \tag{4}$$

In equation (4), $\Delta E_j(x)$ is $E(x')$ - $E(x)$, representing the energy increment of this state move, and is given by equation (5).

$$\Delta E_j(\mathbf{x}) = (2x_j - 1) \sum_{i=1}^{N} w_{ij} x_i \tag{5}$$

The calculation of equation (5) has a complexity of the order of $O(N)$ and is less complex than the direct calculation of energy with a complexity of the order of $O(N^2)$.

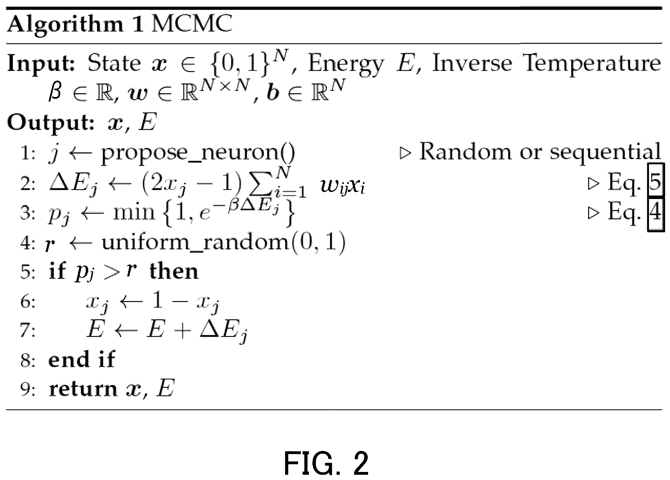

FIG. 2 illustrates an example of an MCMC algorithm for a Boltzmann machine.

Inputs are a state x, energy E (initial value), an inverse temperature $\beta$, a weight coefficient matrix w, and a bias coefficient matrix b. Outputs are a state x and energy E.

First, the value of a discrete variable $x_j$ (corresponding to a neuron of a recurrent neural network) with identification number j is proposed to be flipped, and $\Delta E_j$ is calculated from equation (5) . A discrete variable for a flip is randomly or sequentially proposed. Then, the probability $p_j$ is calculated from equation (4), and a uniform random number r in the range of 0 to 1 is generated. If $p_j > r$, $x_j$ is updated to 1 - $x_j$, and E is updated to E + $\Delta E_j$.

When the MCMC algorithm satisfies a balance condition defined by equation (6), it is guaranteed to converge to an equilibrium distribution $\pi_\beta(x)$.

$$\sum_{\mathbf{x}' \in D} p(\mathbf{x}|\mathbf{x}')\pi(\mathbf{x}') = \sum_{\mathbf{x}' \in D} p(\mathbf{x}'|\mathbf{x})\pi(\mathbf{x}) \quad \forall \mathbf{x} \in D \tag{6}$$

In equation (6), p(x|x') represents a probability of proposing a move to x', accepting this move, and moving from x to x'. This is a sufficient condition to guarantee the convergence. However, many MCMC algorithms in practice satisfy a detailed balance condition defined by equation (7). The detailed balance condition is a special case of the balance condition.

$$p(\mathbf{x}|\mathbf{x}')\pi(\mathbf{x}') = p(\mathbf{x}'|\mathbf{x})\pi(\mathbf{x}) \quad \forall \mathbf{x} \in D \quad \forall \mathbf{x}' \in D \tag{7}$$

The detailed balance condition guarantees convergence, although it is not an indispensable condition.

A simple approach to satisfy the detailed balance condition in a QUBO model is to randomly propose a discrete variable whose value is to be flipped. Hereinafter, this approach is called a random approach. In this case, the detailed balance condition is given by equation (8).

$$p(\mathbf{x}'|\mathbf{x}) = \frac{1}{N}T(\mathbf{x}'|\mathbf{x}) \quad \forall \mathbf{x}' \in \psi(\mathbf{x}) \tag{8}$$

In equation (8), $\psi(x)$ is a set of all N states with a Hamming distance of 1 from x.

There is another approach (sequential approach) in a QUBO model to propose a discrete variable whose value is to be flipped, sequentially in order rather than randomly. In other words, at the k-th iteration, the r-th discrete variable is proposed for a value flip. Here, k = r - 1 (mod N).

Although this approach violates the detailed balance condition, it satisfies the balance condition and is therefore guaranteed to converge (see, for example, R. Ren and G. Orkoulas, "Acceleration of markov chain monte carlo simulations through sequential updating," The Journal of Chemical Physics, vol. 124, no. 6, p. 064109, 2006). In addition, for example, A. Barzegar et al., "Optimization of population annealing monte carlo for large-scale spin-glass simulations," Phys. Rev. E, vol. 98, p. 053308, Nov 2018 teaches that the sequential approach is more efficient than the random approach as the problem size increases. Furthermore, the sequential approach does not need a random number generator for the proposal stage, which makes it easier to implement the sequential approach than the random approach that needs the random number generator. Also, the sequential approach achieves faster computation than the random approach.

(Population Annealing Method)

The data processing apparatus according to the present embodiment searches for a solution to a combinatorial optimization problem using a population annealing method. The population annealing method will now be described.

In the population annealing method, MCMC sampling from a Boltzmann distribution starts at a high temperature ($\beta_{start}$ (start inverse temperature) $\approx 0$) and with a population of R replicas of a Boltzmann machine in parallel. Each time sampling is performed a predetermined number of times ($\theta$ times), a resampling process is performed, and the inverse temperature is increased by $\Delta\beta = (\beta_{end}$ (end inverse temperature) $- \beta_{start})/(N_T - 1)$, where $N_T$ denotes the number of temperature parameters ($\beta$ in this example). The resampling stage eliminates high-energy replicas including replicas trapped in local minimum states, and duplicates low-energy replicas instead. A weight (evaluation value) representing the importance of the i-th replica is defined as equation (9) based on the energy of the replica.

$$W^{(i)} = e^{-\Delta\beta E^{(i)}} \quad 1 \le i \le R_\beta \tag{9}$$

The evaluation value of equation (9) is normalized to equation (10).

$$\tau^{(i)} = R_\beta \frac{W^{(i)}}{\sum_{j=1}^{R_\beta} W^{(j)}} \quad 1 \le i \le R_\beta \tag{10}$$

Then, using the evaluation value $\tau^{(i)}$ of equation (10), the i-th replica is duplicated $c^{(i)}$ times according to equation (11).

$$c^{(i)} = \begin{cases} \lceil \tau^{(i)} \rceil & with\,prob.\,\tau^{(i)} - \lfloor \tau^{(i)} \rfloor \\ \lfloor \tau^{(i)} \rfloor & otherwise \quad 1 \le i \le R_\beta \end{cases} \tag{11}$$

After changing $\beta$ to $\beta' = \beta + \Delta\beta$, the population size (replica count) fluctuates slightly according to equation (12).

$$R_{\beta'} = \sum_{i=1}^{R_\beta} c_i \approx R \qquad (12)$$

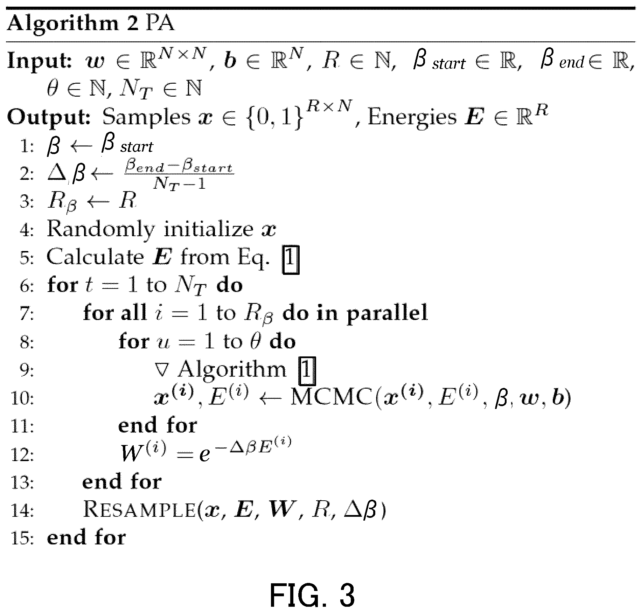

FIG. 3 illustrates an example of an overall algorithm for the population annealing method.

Inputs are a weight coefficient matrix w, a bias coefficient matrix b, a replica count R, a start inverse temperature $\beta_{start}$, an end inverse temperature $\beta_{end}$, a predetermined number of times $\theta$ defining a resampling cycle, and a temperature parameter count $N_T$. Outputs are the state and energy of each replica.

First, $\beta$ is set to $\beta_{start}$ (line 1), $\Delta\beta$ is set to $(\beta_{end} - \beta_{start})/(N_T - 1)$ (line 2), and $R_\beta$ is set to R (line 3). Then, the state x is initialized randomly (line 4), and the initial value of E is calculated from equation (1) (line 5).

Then, the operations on lines 7 to 14 are repeated for t = 1 to $N_T$. In addition, the operations on lines 8 to 12 are performed for i = 1 to $R_\beta$ in parallel. In addition, the above-described MCMC algorithm presented in FIG. 2 is executed for u = 1 to $\theta$.

When u has reached $\theta$, the evaluation value $W^{(i)}$ is calculated for each replica in the manner as described above, and then the resampling process is performed.

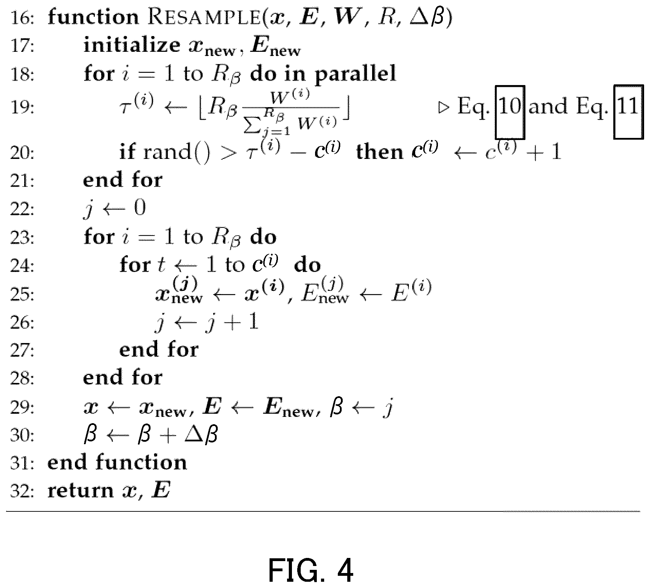

FIG. 4 illustrates an example of an algorithm for the resampling process.

First, a vector variable $x_{new}$ representing the initial state of a new replica created by a duplication and a vector variable $E_{new}$ representing the initial energy of the new replica created by the duplication are initialized (line 17). Then, the operations on lines 19 and 20 are performed for i = 1 to $R_\beta$ in parallel. In lines 19 and 20, the operations based on equations (10) and (11) are performed, and if rand() > $\tau^{(i)}$ - $c^{(i)}$, $c^{(i)}$ is updated to $c^{(i)}$ + 1 (line 20) .

After j is initialized to zero thereafter (line 22), the operations on lines 24 to 27 are performed for i = 1 to $R_\beta$. In addition, the operations on lines 25 to 26 are repeated for t = 1 to $c^{(i)}$. In line 25, the state $x^{(i)}$ of the i-th replica is substituted for $x^{(j)}_{new}$ representing the initial state of the j-th replica newly created by the duplication. In addition, the energy $E^{(i)}$ of the i-th replica is substituted for $E^{(j)}_{new}$ representing the initial energy of the j-th replica. In line 26, j is incremented by one.

When i has reached $R_\beta$, $x_{new}$ is substituted for the state x, $E_{new}$ is substituted for the energy E, and j is substituted for $\beta$. Then, $\beta$ is updated to $\beta + \Delta\beta$.

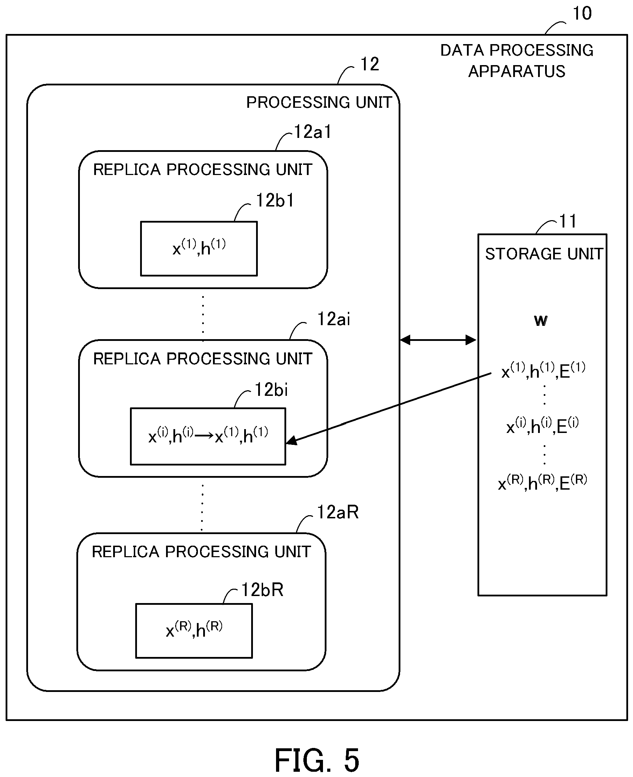

FIG. 5 illustrates an example of the data processing apparatus according to the present embodiment, which searches for a solution to a combinatorial optimization problem using the population annealing method.

The data processing apparatus 10 is a computer, for example, and includes a storage unit 11 and a processing unit 12.

The storage unit 11 is a volatile storage device that is an electronic circuit such as a dynamic random access memory (DRAM), or a non-volatile storage device that is an electronic circuit such as a hard disk drive (HDD) or a flash memory, for example. The storage unit 11 may be a high bandwidth memory (HBM). In addition, the storage unit 11 may include an electronic circuit such as a static random access memory (SRAM) register.

The storage unit 11 holds the values of $x_1$ to $x_N$ and the values of a plurality of local fields with respect to each replica of a Boltzmann machine. For example, $x_1$ to $x_N$ are N discrete variables included in the Boltzmann machine evaluation function defined by equation (1). The plurality of local fields each represents a change occurring in the value of the evaluation function when the value of the corresponding one of $x_1$ to $x_N$ is changed (flipped). The local field $h_i$ ($1 \leq i \leq N$) for $x_i$ is given by equation (13).

$$h_i(\mathbf{x}) = b_i + \sum_{j=1}^{N} w_{ij} x_j \quad 1 \leq i \leq N \qquad (13)$$

The energy increment given by equation (5) is reformulated into equation (14) using the local field.

$$\Delta E_i(\mathbf{x}) = (2x_i - 1)h_i(\mathbf{x}) \quad 1 \leq i \leq N \qquad (14)$$

In this connection, equation (5) represents an energy increment occurring when the value of $x_j$ is flipped, whereas equation (14) represents an energy increment occurring when the value of $x_i$ is flipped. In equation (14), $2x_i$ - 1 is equal to -1 when $x_i$ = 0, and $2x_i$ - 1 is equal to +1 when $x_i$ = 1. Therefore, $\Delta E_i(x)$ is calculated by multiplying the local

field $h_i$ by a sign (+1 or -1) that depends on $x_i$.

In FIG. 5, $x_1$ to $x_N$ and $h_1$ to $h_N$ for the i-th replica among the R replicas are collectively referred to as $x^{(i)}$ and $h^{(i)}$, respectively.

In this connection, the storage unit 11 also holds a weight coefficient matrix w, which is information on the evaluation function, and the energy $E^{(1)}$ to $E^{(R)}$ of the replicas. In this connection, the storage unit 11 may also hold a bias coefficient matrix b, a replica count R, a start inverse temperature $\beta_{start}$, an end inverse temperature $\beta_{end}$, a predetermined number of times $\theta$ defining a resampling cycle, and a temperature parameter count $N_T$ as described above.

The processing unit 12 is implemented by a processor, which is a hardware device such as a central processing unit (CPU), a graphics processing unit (GPU), or a digital signal processor (DSP). Alternatively, the processing unit 12 may be implemented by an electronic circuit such as an application specific integrated circuit (ASIC) or an FPGA. For example, the processing unit 12 executes programs stored in the storage unit 11 to cause the data processing apparatus 10 to perform a solution search. In this connection, the processing unit 12 may be a set of multiple processors.

The processing unit 12 includes a plurality of replica processing units that respectively run replicas of a Boltzmann machine. FIG. 5 illustrates R replica processing units 12a1 to 12aR that run R replicas. The replica processing units 12a1 to 12aR are implemented by R processors or R processor cores, for example. In this connection, more than R replica processing units 12a1 to 12aR may be provided, considering the possibility of an increase in the replica count in a resampling process.

In addition, each of the replica processing units 12a1 to 12aR is provided with a storage unit. For example, the replica processing unit 12a1 is provided with a storage unit 12b1, the replica processing unit 12ai is provided with a storage unit 12bi, and the replica processing unit 12aR is provided with a storage unit 12bR.

Each storage unit 12b1 to 12bR has a smaller capacity than the storage unit 11, but is designed for faster access than the storage unit 11. For example, a volatile storage device that is an electronic circuit such as an SRAM register (or cache memory) is used. In this connection, each storage unit 12b1 to 12bR may be a storage space in a single storage device.

Each storage unit 12b1 to 12bR stores therein the values of a plurality of corresponding discrete variables and the values of a plurality of corresponding local fields. For example, when the replica processing unit 12a1 runs the 1st replica, the storage unit 12b1 stores therein $x^{(1)}$ and $h^{(1)}$. When the replica processing unit 12aR runs the R-th replica, the storage unit 12bR stores therein $x^{(R)}$ and $h^{(R)}$.

Since the storage units 12b1 to 12bR are accessed for an update of the local fields at each iteration of an MCMC update process, the weight coefficient matrix w may be stored in the storage units 12b1 to 12bR. However, since the weight coefficient matrix w is too large to be stored in an SRAM register or cache memory, it is stored in the storage unit 11 in the example of FIG. 5.

In this connection, the storage units 12b1 to 12bR may be provided outside the processing unit 12.

The replica processing units 12a1 to 12aR individually repeat the MCMC update process for their corresponding replicas, on the basis of a set value (hereinafter, referred to as a temperature simply) of a temperature parameter and the values of $h^{(1)}$ to $h^{(R)}$ stored in the corresponding storage units 12b1 to 12bR. The update process is performed according to the MCMC algorithm presented in FIG. 2, for example, and involves an update of any value of the plurality of discrete variables and an update of the energy E according to the value update. In addition, the plurality of local fields are updated according to the value update. Each time the value of a discrete variable is updated, the value of the discrete variable and the values of the local fields stored in the storage unit 11 may be updated. Alternatively, these values may be updated collectively in the resampling process.

The processing unit 12 performs the resampling process based on the values of the plurality of discrete variables and energy E of the plurality of replicas each time the number of iterations of the update process reaches a predetermined value. The resampling process is performed according to the algorithm presented in FIG. 4, for example. In addition, when a second replica is created by duplicating a first replica among the plurality of replicas, the processing unit 12 reads the values of the plurality of discrete variables and the values of the plurality of local fields with respect to the first replica from the storage unit 11, and stores (copies) them in a storage unit provided for a replica processing unit that is to run the second replica among the replica processing units 12a1 to 12aR.

For example, consider now the case where the i-th replica is eliminated and the 1st replica is duplicated in the resampling process. In this case, for example, as illustrated in FIG. 5, $x^{(1)}$ and $h^{(1)}$ are read from the storage unit 11 and are stored in the storage unit 12bi of the replica processing unit 12ai that has run the i-th replica.

In this connection, in the above case, the processing unit 12 may read the values of the plurality of discrete variables and the values of the plurality of local fields with respect to the first replica from the storage unit corresponding to the first replica, instead of the storage unit 11, and may store them in a storage unit provided for a replica processing unit that is to run the second replica.

The above processing eliminates the need of re-calculating local fields for a duplicate replica each time the resampling process is performed. This reduces the computational cost, increases the computational efficiency, and improves the problem solving performance, even in searching for a solution to a large-scale combinatorial optimization problem using a large number of replicas.

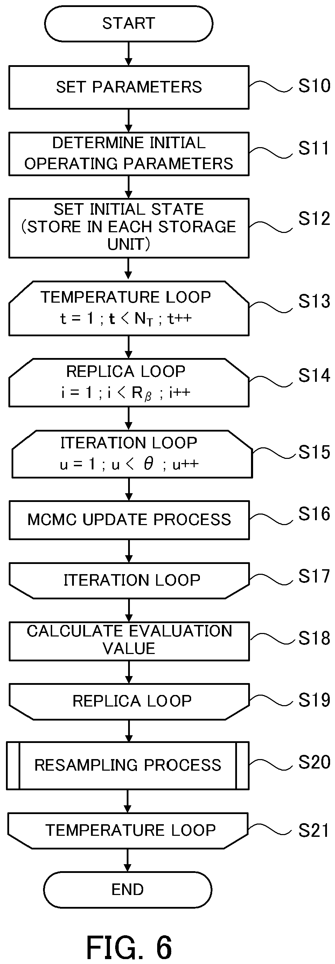

FIG. 6 is a flowchart illustrating an example of a procedure for a solution search process using the population annealing method. FIG. 6 illustrates a flow of a search process according to the overall algorithm for the population annealing method presented in FIG. 3.

First, a variety of parameters are set (step S10). At step S10, a weight coefficient matrix w, a bias coefficient matrix b, a replica count R, a start inverse temperature $\beta_{start}$, an end inverse temperature $\beta_{end}$, a predetermined number of times $\theta$ defining a resampling cycle, a temperature parameter count $N_T$, and others are set.

Then, the processing unit 12 determines initial operating parameters (step S11). For example, the processing unit 12 determines $\beta = \beta_{start}$, $\Delta\beta = (\beta_{end} - \beta_{start})/(N_T - 1)$, and $R_\beta = R$ as the initial operating parameters.

After that, the processing unit 12 sets the initial state (step S12). For example, the processing unit 12 randomly determines the values of $x_1$ to $x_N$ to thereby determine the initial state. In addition, at step S12, the processing unit 12 calculates the initial local fields corresponding to the determined initial state from equation (13). In addition, the processing unit 12 calculates the initial energy corresponding to the determined initial state from equation (1). The initial state and initial local fields are stored as the initial values of the states $x^{(1)}$ to $x^{(R)}$ and local fields $h^{(1)}$ to $h^{(R)}$ for the replicas in the storage units 11 and 12b1 to 12bR. The initial energy is stored as the initial values of the energy $E^{(1)}$ to $E^{(R)}$ for the replicas in the storage unit 11.

Then, a temperature loop (steps S13 to S21) is repeated from t = 1 until t < $N_T$ while t is incremented by one. In addition, a replica loop (steps S14 to S19) is repeated from i = 1 until i < $R_\beta$ while i is incremented by one. Furthermore, an iteration loop (steps S15 to S17) is repeated from u = 1 until u < $\theta$ while u is incremented by one.

At step S16, the processing unit 12 performs an MCMC update process according to the MCMC algorithm presented in FIG. 2, for example.

When u has reached $\theta$, the processing unit 12 calculates the evaluation value $W^{(i)}$ from equation (9) (step S18). When i has reached $R_\beta$, the processing unit 12 performs a resampling process (step S20). When t has reached $N_T$, the search process is completed.

When the search is completed, the data processing apparatus 10 may output a search result (for example, the lowest energy value and the state x that provides the lowest energy value). For example, the search result may be displayed on a display device connected to the data processing apparatus 10 or may be sent to an external apparatus.

In this connection, steps S14 to S19 of FIG. 6 are repeated to run the replicas in order, by way of example. Alternatively, the replica processing units 12a1 to 12aR illustrated in FIG. 5 may be used to execute steps S15 to S18 for the R replicas in parallel.

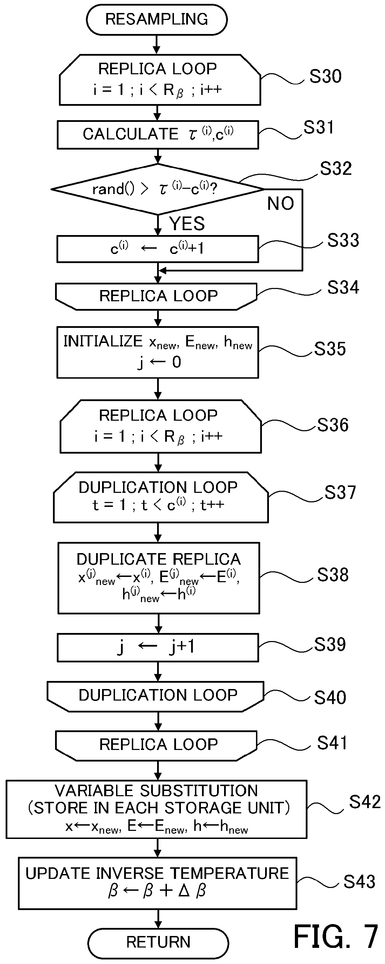

FIG. 7 is a flowchart illustrating an example of a procedure for the resampling process.

First, a replica loop (step S30 to S34) is repeated from i = 1 until i < $R_\beta$ while i is incremented by one.

At step S31, the processing unit 12 calculates the evaluation value $\tau^{(i)}$ from equation (10) and the number of duplications $c^{(i)}$ from equation (11).

After that, the processing unit 12 determines whether rand() > $\tau^{(i)} - c^{(i)}$ (step S32), and if rand() > $\tau^{(i)} - c^{(i)}$, updates $c^{(i)}$ to $c^{(i)} + 1$ (step S33).

If rand() > $\tau^{(i)} - c^{(i)}$ is not obtained or if i has not reached $R_\beta$ after step S33, the processing unit 12 increments i by one and the procedure returns back to step S31.

When i has reached $R_\beta$, the processing unit 12 initializes the vector variables $x_{new}$, $E_{new}$, and $h_{new}$ to represent the initial state, initial energy, and initial local fields for a new replica created by a duplication, and also initializes the variable j to zero (step S35).

After that, a replica loop (steps S36 to S41) is repeated from i = 1 until i < $R_\beta$ while i is incremented by one. In addition, a duplication loop (step S37 to S40) is repeated from t = 1 until t < $c^{(i)}$ while t is incremented by one.

At step S38, the processing unit 12 duplicates a replica. At step S38, the processing unit 12 substitutes the state $x^{(i)}$ of the i-th replica read from the storage unit 11 for $x^{(j)}_{new}$ representing the initial state of the j-th replica newly created by the duplication. In addition, the processing unit 12 substitutes the energy $E^{(i)}$ of the i-th replica read from the storage unit 11 for $E^{(j)}_{new}$ representing the initial energy of the j-th replica. Furthermore, the processing unit 12 substitutes the local fields $h^{(i)}$ of the i-th replica read from the storage unit 11 for $h^{(j)}_{new}$ representing the initial local fields of the j-th replica.

Then, the processing unit 12 substitutes j + 1 for j (step S39). If t has not reached $c^{(i)}$, the processing unit 12 increments t by one and the procedure returns back to step S38.

If t has reached $c^{(i)}$ but i has not reached $R_\beta$, the processing unit 12 increments i by one and the procedure returns back to step S37.

When i has reached $R_\beta$, the processing unit 12 substitutes $x_{new}$ for the state x, $E_{new}$ for the energy E, and $h_{new}$ for the local fields h with respect to one or a plurality of new replicas created by the duplication (step S42). At step S42, the state $x = x_{new}$, the energy $E = E_{new}$, and the local fields $h = h_{new}$ with respect to each new replica are stored in the storage unit 11. In addition, the state $x = x_{new}$ and the local fields $h = h_{new}$ are stored (copied) in the storage unit (any of the storage units 12b1 to 12bR) of a replica processing unit that is to run the new replica.

Through steps S38 and S42, the above-described process is performed, which reads the values of the plurality of discrete variables and the values of the plurality of local fields with respect to the first replica from the storage unit 11 and stores them in the storage unit of a replica processing unit that is to run the second replica among the replica processing units 12a1 to 12aR.

Then, the processing unit 12 updates $\beta$ to $\beta + \Delta\beta$ (step S43) and the procedure moves to step S21 of FIG. 6.

In this connection, steps S30 to S34 of FIG. 7 are repeated to run the replicas in order, by way of example. Alternatively, the replica processing units 12a1 to 12aR illustrated in FIG. 5 may be used to execute steps S31 to S33 for R replicas in parallel.

In addition, the processing order illustrated in FIGS. 6 and 7 is an example and may be changed where appropriate.

(Parallel MCMC Algorithm)

In MCMC algorithms, many proposed MCMC moves may be rejected during Monte Carlo simulation, as the moves increase the energy significantly or the temperature is very low. This is wasteful in solving combinatorial optimization problems, as the system stays at the same state for a large amount of time.

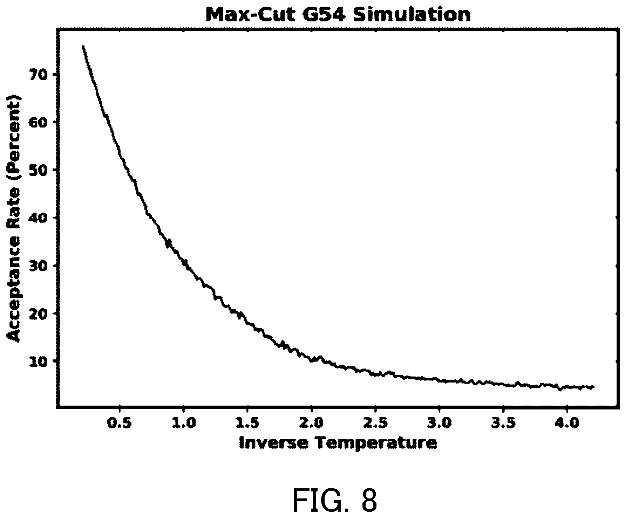

FIG. 8 illustrates an example of acceptance rate of an MCMC simulation on a Max-Cut problem. FIG. 8 illustrates an example that uses Max-Cut G54, which is a Max-Cut instance (see, for example, Y. ye, "Gset Max-Cut Library", 2003, [searched on June 28, 2022], the Internet <URL: https://web.stanford.edu/~yyye/yyye/Gset/>). The horizontal axis represents inverse temperature, whereas the vertical axis represents acceptance rate.

As seen in FIG. 8, the acceptance rate at inverse temperatures of 2.0 or higher (more than half of the entire simulation) is less than 10%. This means that more than 90% of the iterations of the MCMC simulation are wasted.

In order to avoid rejections of proposed MCMC moves, parallel MCMC algorithms are used. Instead of proposing the value of a single discrete variable to flip (a single MCMC move) and determining whether to accept the proposal, the parallel MCMC algorithms evaluate the acceptance rates of flipping the respective values of all discrete variables in parallel (this stage is referred to as a trial stage). After that, the parallel MCMC algorithms flip the value of one of the discrete variables on the basis of their acceptance rates. This approach accelerates the convergence to a target distribution in a sampling problem or the detection of a global minimum state in a combinatorial optimization problem.

The following two parallel MCMC algorithms are used as examples.

(Uniform Selection MCMC Algorithm)

After the trial stage, a selection stage is executed. At the selection stage, a uniform selection MCMC algorithm generates random numbers for the respective discrete variables in parallel, and determines whether their value flips are potentially accepted according to equation (4). If there are a plurality of discrete variables that have been accepted for the value flips, the uniform selection MCMC algorithm randomly selects one of these discrete variables with a uniform probability, and flips the value of the selected discrete variable.

This approach is not guaranteed to converge to an equilibrium distribution (see, for example, Non-Patent Literature 9). In fact, proposing a flip of the value of a single discrete variable randomly and determining whether to accept it is different from evaluating the flips of the values of all discrete variables in parallel and randomly selecting one of the discrete variables accepted for the value flips.

In order to implement the above selection stage in hardware that achieves parallel processing, a parallel reduction tree that compares paired discrete variables accepted for value flips and selects one discrete variable is usable (see, for example Non-Patent Literature 8). This parallel reduction tree randomly selects one of paired discrete variables accepted for the value flips.

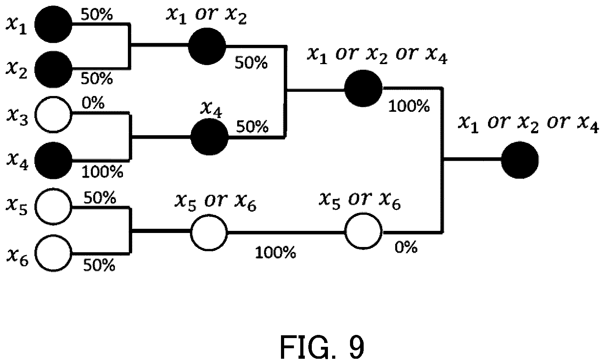

FIG. 9 illustrates an example of the parallel reduction tree.

FIG. 9 illustrates an example of a parallel reduction tree for a Boltzmann machine with six discrete variables ($x_1$ to $x_6$). Discrete variables accepted for value flips are represented by black circles. In the example of FIG. 9, $x_1$, $x_2$, or $x_4$ is selected, but it is not that any of $x_1$, $x_2$, or $x_4$ is randomly selected. The probabilities of selecting $x_1$, $x_2$, and $x_4$ are 0.25, 0.25, and 0.5, respectively.

Therefore, the parallel reduction tree does not implement a fair uniform selection and might lead to a wrong distribution.

(Jump MCMC Algorithm)

A jump MCMC algorithm was developed in order to solve the convergence issue of the above-described uniform selection MCMC algorithm (see, for example, Non-Patent Literature 9). After the trial stage, the probability of flipping the value of the i-th discrete variable $x_i$ is calculated from equation (4). The probabilities of the N discrete variables are normalized as equation (15).

$$\bar{p_j} = \frac{p_i}{\sum_{j=1}^{N} p_j} \quad 1 \le i \le N \tag{15}$$

The j-th discrete variable is selected for a value flip with a probability of $p_j$. Hence, this jump MCMC algorithm reduces the rejection rate for proposed MCMC moves in conventional MCMC algorithms.

Since $p(x|x) = 0$, a multiplicity $M(x)$ is calculated for the state x before the value of $x_j$ is flipped and the state x is changed to x'. $M(x)$ represents in how many iterations the state x would have stayed the same if the jump MCMC algorithm is not used. The multiplicity is a stochastic variable from a probability distribution given by equation (16).

$$p[M(x) = m] = \alpha(\mathbf{x})(1 - \alpha(\mathbf{x}))^{m-1} \tag{16}$$

In equation (16), $\alpha(x)$ represents the probability of escaping from the state x and is given by equation (17).

$$\alpha(\mathbf{x}) = 1 - p(\mathbf{x}|\mathbf{x}) = \sum_{i=1}^{N} p_i \tag{17}$$

As a result, instead of regular samples, the jump MCMC algorithm produces weighted samples, and the weight of each sample is equal to its multiplicity. The expected value of the multiplicity for the state x is calculated as equation (18).

$$E[M(\mathbf{x})] = \sum_{m=1}^{\infty} m.p[M(x) = m] = \frac{1}{\sum_{i=1}^{N} p_i} \tag{18}$$

Although the jump MCMC algorithm solves the convergence issue of the uniform selection MCMC algorithm, the multiplicity calculation for each state causes an additional overhead. Besides, the jump MCMC algorithm uses the random approach of randomly proposing a discrete variable for a value flip and is less efficient than the sequential approach.

The sequential approach is applied to sparsely connected spin glass models and achieves faster operation than the random approach (see Non-Patent Literatures 10 and 11). However, the sequential approach has not been applied to fullyconnected Boltzmann machines as a parallel MCMC algorithm.

The data processing apparatus 10 of the present embodiment is able to employ the following sequential selection MCMC algorithm, for example.

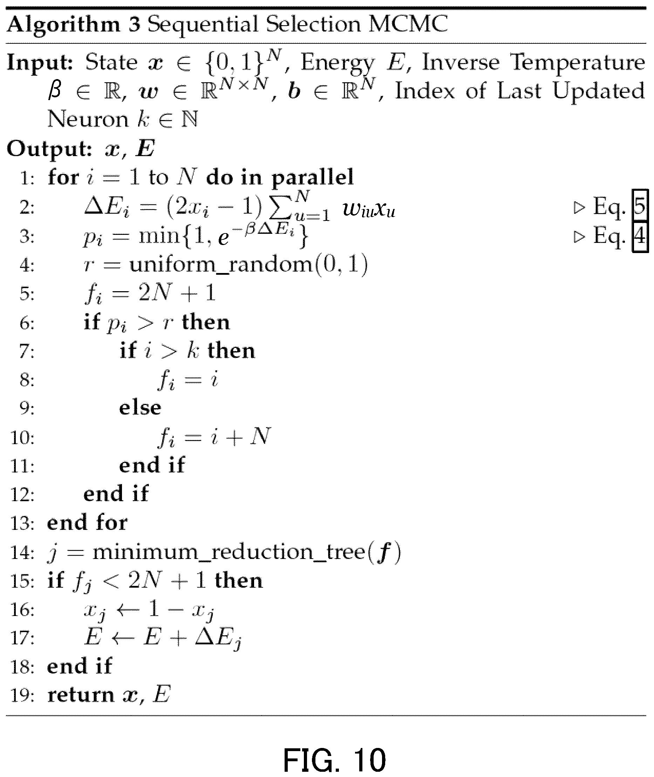

FIG. 10 illustrates an example of a sequential selection MCMC algorithm.

Inputs are a state x, energy E, an inverse temperature $\beta$, a weight coefficient matrix w, a bias coefficient matrix b, and the identification number (index) k of a neuron (discrete variable) whose value has been last updated. Outputs are a state x and energy E.

The operations on lines 2 to 12 are performed in parallel for i = 1 to N. In line 2, $\Delta E_i$ is calculated from equation (5), and in line 3, $p_i$ is calculated from equation (4). In this connection, in the case of using the local fields given by equation (13), $\Delta E_i$ is calculated from equation (14).

In line 4, a uniform random number r in the range of 0 to 1 is generated, and in line 5, an integer flag value $f_i$ for the discrete variable with identification number i is initialized to $f_i = 2N + 1$. Here, N denotes the number of discrete variables in a Boltzmann machine (or Ising model).

After that, if $p_i > r$, the operations on lines 7 to 11 are performed. In lines 7 to 11, $f_i = i$ is set if i > k; $f_i = i + N$ is set otherwise.

In line 14, a discrete variable to be updated (identified by identification number j) is determined on the basis of the obtained flag values and using a to-be-described parallel minimum reduction tree.

After that, if $f_j < 2N + 1$, $x_j$ is updated to $1 - x_j$, and E is updated to $E + \Delta E_j$. In this connection, in the case of using the local fields given by equation (13), the local fields are updated accordingly.

As described above, as in other parallel MCMC algorithms, in the sequential selection MCMC algorithm, first, all discrete variables are processed in parallel in the trial stage. After the trial stage, from the identification numbers following the identification number k, the identification number (smallest next to k) of the discrete variable first accepted for a value flip is selected. To accelerate this selection, a parallel minimum reduction tree (see, for example, M. Harris, "Optimizing Parallel Reduction in CUDA", NVIDIA Developer Technology, 2007) algorithm is usable.

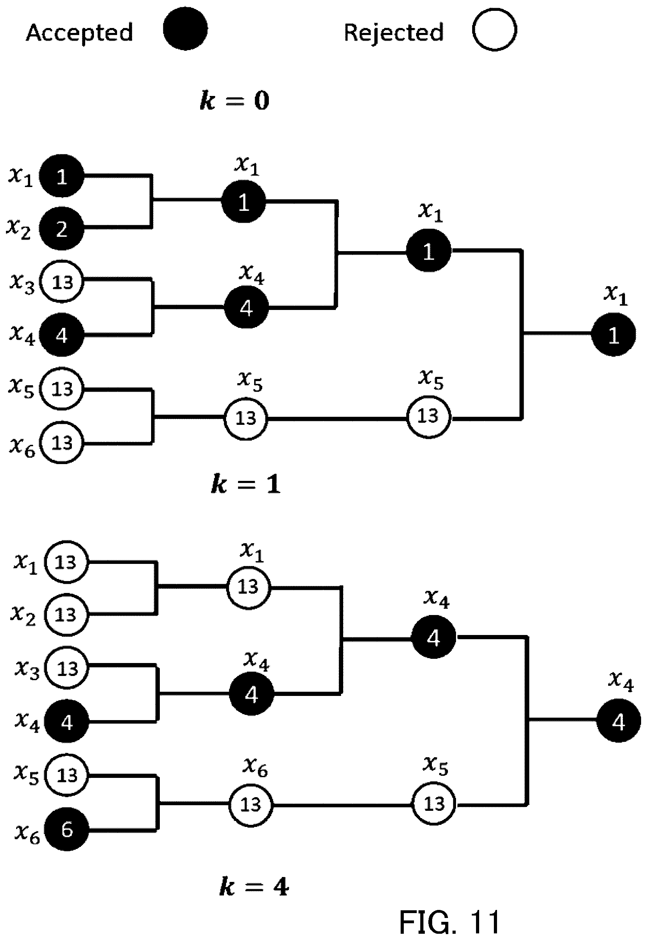

FIG. 11 illustrates an example of a parallel minimum reduction tree.

FIG. 11 illustrates an example of a parallel minimum reduction tree for a Boltzmann machine (N = 6) with six discrete variables ($x_1$ to $x_6$). Discrete variables accepted for value flips are represented by black circles, whereas discrete variables rejected for value flips are represented by white circles. A numeral in each circle indicates the above-described flag value $f_i$.

As in the case of using the parallel reduction tree, in selecting a discrete variable for a flip using the parallel minimum reduction tree, paired discrete variables are compared and one discrete variable is selected. Note that, in the parallel minimum reduction tree, a discrete variable with a smaller flag value $f_i$ is selected from the paired discrete variables.

The flag value $f_i$ assigned to a discrete variable with identification number i is represented by equation (19).

$$f_i = \begin{cases} 2N + 1 & x_i \ is \ rejected \\ i + N & x_i \ is \ accepted \ and \ i \leq k \\ i & x_i \ is \ accepted \ and \ i > k \end{cases} \qquad (19)$$

With equation (19), small flag values $f_i$ are assigned to discrete variables that have identification numbers i greater than k and that are accepted for value flips. Large flag values $f_i$ calculated by adding N to i as a penalty are assigned to discrete variables that have identification numbers i less than or equal to k and that are accepted for value flips. By doing so, the minimum flag value $f_i$ is guaranteed to belong to z discrete variable first accepted for a value flip after the previously selected discrete variable. Discrete variables whose flag values are equal to $f_i = 2N + 1$ are not selected.

As illustrated in FIG. 11, k is zero at first. In the case where $x_1$, $x_2$, and $x_4$ are accepted for value flips at the first trial stage, $x_1$, $x_2$, and $x_4$ have a flag value of $f_i = i$. In addition, $x_3$, $x_5$, and $x_6$ that are rejected for value flips have a flag value of $f_i = 2N + 1 = 13$. In this case, $x_1$ is selected, as illustrated in FIG. 11. Thereby, k is updated to k = 1.

In the case $x_4$ and $x_6$ are accepted for value flips at the next trial stage, $x_4$ and $x_6$ have a flag value of $f_i = i$. In addition, $x_1$, $x_2$, $x_3$, and $x_5$ that are rejected for value flips have a flag value of $f_i = 2N + 1 = 13$. In this case, $x_4$ is selected, as illustrated in FIG. 11. Thereby, k is updated to k = 4.

The following summarizes the procedure for the sequential selection MCMC algorithm performed by the data processing apparatus 10 of the present embodiment, using a flowchart. In the data processing apparatus 10 that performs the population annealing, the replica processing units 12a1 to 12aR of the processing unit 12 are able to individually perform the following process in parallel.

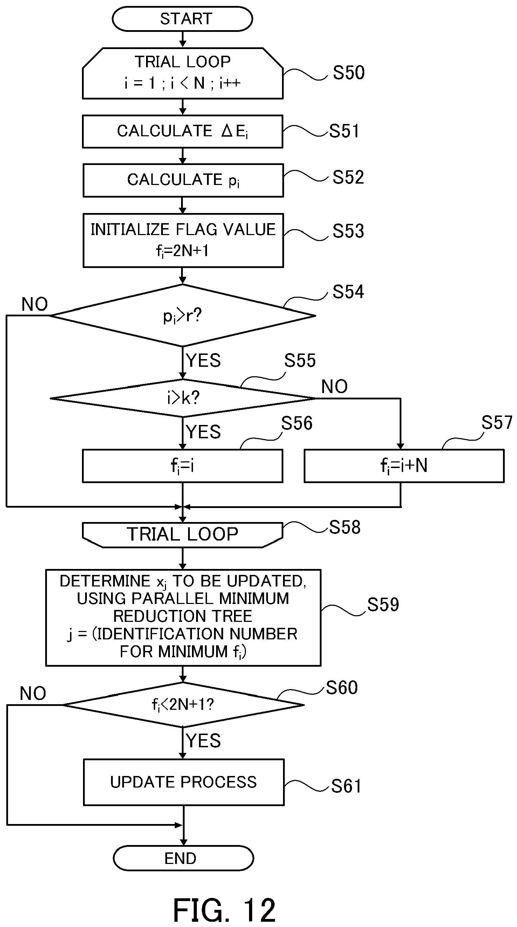

FIG. 12 is a flowchart illustrating an example of a procedure for the sequential selection MCMC algorithm. FIG. 12 illustrates a processing flow based on the sequential selection MCMC algorithm presented in FIG. 10.

First, the replica processing units 12a1 to 12aR perform a trial loop (steps S50 to S58) from i = 1 until i < N while incrementing i by one.

In the trial loop, the replica processing units 12a1 to 12aR calculate $\Delta E_i$ from equation (14) (step S51), and calculate $p_i$ from equation (4) (step S52). Then, the replica processing units 12a1 to 12aR initialize the flag value $f_i$ to $f_i = 2N + 1$ (step S53), and determine whether $p_i > r$ (uniform random number in the range of 0 to 1) (step S54).

If $p_i > r$, then the replica processing units 12a1 to 12aR determine whether i > k (step S55). If i > k, then the replica processing units 12a1 to 12aR set $f_i$ to $f_i = i$ (step S56). If i > k is not obtained, then the replica processing units 12a1 to 12aR set $f_i$ to $f_i = i + N$ (step S57). In the case of performing the above-described population annealing, the flag values $f_i$ set for the replicas are used in each trial and are therefore stored in the storage units 12b1 to 12bR, which allow faster access than the storage unit 11 in FIG. 5.

If $p_i > r$ is not obtained at step S54 or if i has not reached N after step S56 or S57, the replica processing units 12a1 to 12aR increment i by one and the procedure returns back to step S51.

When i has reached N, the replica processing units 12a1 to 12aR determine $x_j$ to be updated, using the above-described parallel minimum reduction tree (step S59). In the case of using the parallel minimum reduction tree, j is taken as an identification number for the minimum flag value $f_i$.

After that, the replica processing units 12a1 to 12aR determine whether $f_i < 2N + 1$ (step S60). If $f_i < 2N + 1$, the replica processing units 12a1 to 12aR perform an update process (step S61). In the update process, $x_j$ is updated to $1 - x_j$, and E is updated to $E + \Delta E_j$. In this connection, the local fields given by equation (13) are updated according to the update of $x_j$. One iteration of the sequential selection MCMC algorithm is now complete.

In this connection, in FIG. 12, the replica processing units 12a1 to 12aR may execute steps S50 to S58 for a plurality of i in parallel.

The processing order of FIG. 12 is an example and may be changed where appropriate.

(Experimental Examples)

The following describes experimental results for comparing performance among the sequential selection MCMC algorithm, uniform selection MCMC algorithm, and jump MCMC algorithm that are implemented with population annealing.

In the following experimental examples, a GPU with 80 streaming multiprocessors (SMs) is used as the processing unit 12. Each SM has 64 processor cores that are able to execute commands in parallel. The replica processing units 12a1 to 12aR illustrated in FIG. 5 are implemented by a plurality of thread blocks. Each thread block includes a plurality of threads. A compiler automatically assigns each thread block to an SM and each thread to a processor core.

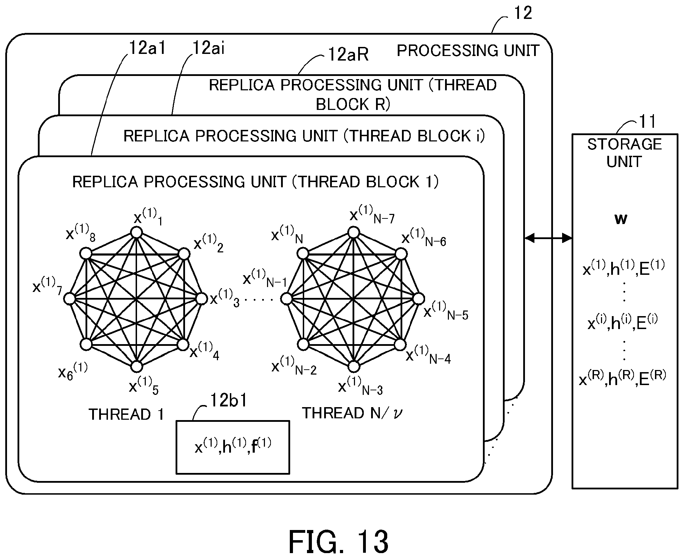

FIG. 13 illustrates an example of GPU implementation. The same reference numerals as used in FIG. 5 are given to the corresponding components in FIG. 13.

FIG. 13 illustrates an example in which thread blocks 1 to R respectively correspond to the replica processing units 12a1 to 12aR. In this experimental example, each storage unit 12b1 to 12bR illustrated in FIG. 5 is an on-chip shared memory that is accessible to all threads within a thread block. Communication between threads within a thread block is possible through this shared memory.

In the case of dedicating one thread to a group of v discrete variables, the number of threads is N/v. In the case where the maximum number of threads in one thread block is 1024 and N is greater than 1024, v > 1 holds. In the following experimental example, $\nu = 16$ is used.

At each iteration of the parallel MCMC algorithm, each thread evaluates the probability $p_j$ of flipping the value of one of the discrete variables assigned thereto and generates a flag $f_j$. In this connection, in this experimental example, $\Delta E_j(x)$ is calculated from equation (5), and $p_j$ is calculated from equation (4) using the $\Delta E_j(x)$. The flag $f_j$ is stored in the above shared memory (for example, the storage unit 12b1 for the thread block 1). In addition, each thread executes the parallel reduction tree algorithm. In the case of using the sequential selection MCMC algorithm, the parallel reduction tree is a parallel minimum reduction tree as illustrated in FIG. 11. In the case of using the uniform selection MCMC algorithm, a tree as illustrated in FIG. 9 is used. In the case of using the jump MCMC algorithm, a probability normalized as equation (15) is used, in place of the probability $p_j$.

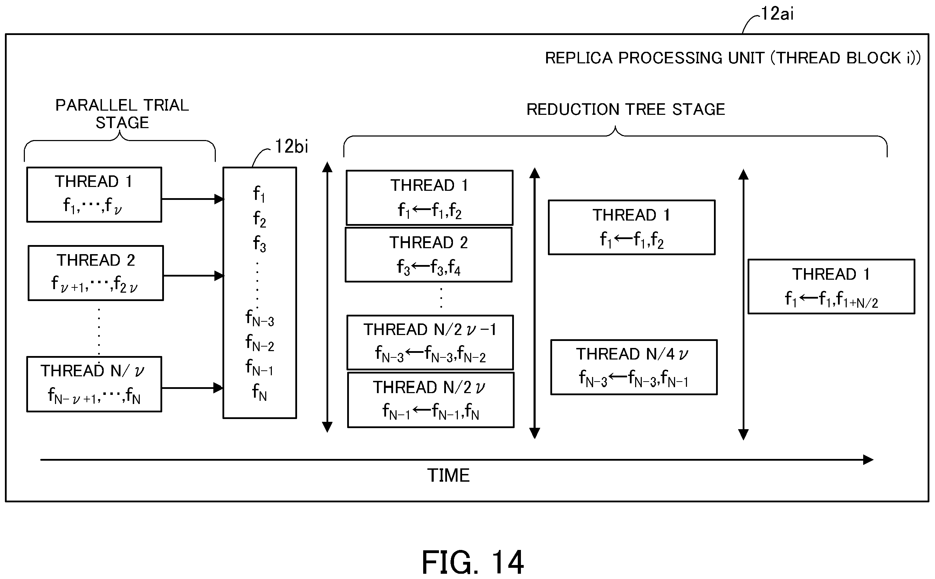

FIG. 14 illustrates an example of executing threads in a thread block.

FIG. 14 illustrates an example of executing threads in the replica processing unit 12ai (corresponding to the thread block i) that runs the i-th replica. In the parallel trial stage, N/v threads perform the trial in parallel and store flags $f_1$ to $f_N$ in the shared memory (storage unit 12bi).

The flags are zero or one in the uniform selection MCMC algorithm, are probabilities given by equation (15) in the jump MCMC algorithm, and are calculated from equation (19) in the sequential selection MCMC algorithm.

Then, the reduction tree stage is executed. The threads in each group in the vertical direction in FIG. 14 are synchronized together. Each thread selects one of two flags.

First, the convergence of the above three MCMC algorithms was tested on a large-scale problem with an exactly known Boltzmann distribution. Then, Max-Cut instances were calculated with each of these MCMC algorithms.

A two-dimensional Ising model with bi-modal disorder is a suitable benchmark for testing the above MCMC algorithms as it is exactly solvable. This problem uses N discrete variables with a value of -1 or +1 and N $\times$ N weight coefficients with a value of - 1, 0, or +1. When the N discrete variables are arranged in a two-dimensional grid, each weight coefficient between each discrete variable and its four neighbor discrete variables above, below, to the left, and to the right is randomly set to either -1 or +1, and all other weight coefficients are set to zero.

A 1024-spin two-dimensional Ising model instance is generated with an energy distribution known in advance. The energy distribution is given by equation (20).

$$\pi_\beta(e) = \sum_{E(\mathbf{x})=e} \pi_\beta(\mathbf{x}) \quad \forall e \in \mathbb{R} \qquad (20)$$

Here, the instance has two ground states: a state where all the 1024 discrete variables have a value of +1; and a state where all the 1024 discrete variables have a value of -1.

Each of the above three MCMC algorithms was run at T = 1/β = 10 with R = 640 replicas and for $N_T\theta = 1.024 \times 10^5$ iterations. Then, 30 samples were taken from each replica, so that a total of m ≈ 19200 samples were obtained.

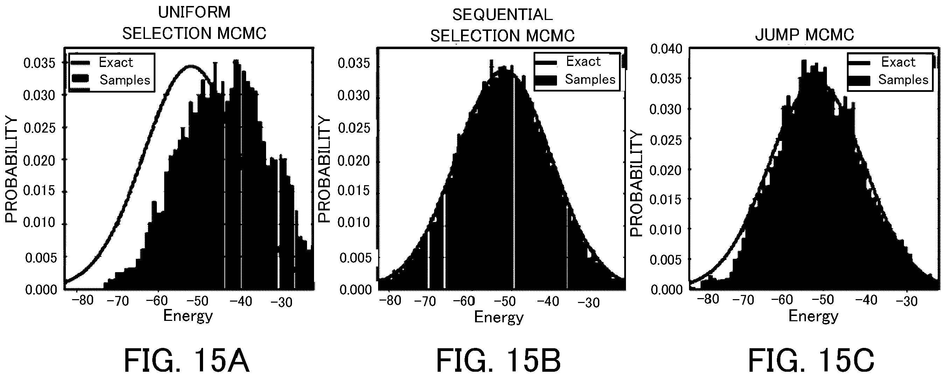

FIGS. 15A to 15C illustrate examples of experimental results of an energy histogram of samples for the uniform selection MCMC algorithm, sequential selection MCMC algorithm, and jump MCMC algorithm. The horizontal axis represents energy, whereas the vertical axis represents probability.

FIGS. 15A to 15C illustrate correct distributions in addition to the energy histograms for the MCMC algorithms.

As seen in FIGS. 15A to 15C, the energy histogram of samples for the uniform selection MCMC algorithm is greatly deviated from the correct distribution. By contrast, the energy histogram of samples for the sequential selection MCMC algorithm performed by the data processing apparatus 10 of the present embodiment almost matches the correct distribution, and so does the jump MCMC algorithm. Therefore, both the sequential selection MCMC algorithm and the jump MCMC algorithm produce correct samples.

The following describes the experimental results of calculating 60 instances of a Max-Cut problem taken from the above-described "Gset Max-Cut Library" with the above three MCMC algorithms.

The Max-Cut problem aims to color the nodes of a graph G in black and white such that the sum of the weights of the edges connecting a black node and a white node is maximized. The QUBO energy function of the Max-Cut problem is represented by equation (21).

$$E(\mathbf{x}) = \sum_{(i,j) \in e} e_{ij}(2x_i x_j - x_i - x_j) \qquad (21)$$

In equation (21), e represents a set of edges in the graph G, and $e_{ij}$ represents the weight of an edge connecting nodes i and j.

In this connection, equation (21) is transformable to the form of equation (1).

In order to compare performance among the above three MCMC algorithms on the Max-Cut problem, the best value (best cut value) and the average value (average cut value) are used. For each instance, each MCMC algorithm was run 100 times and the parameters listed in Table 1 were used.

**Table 1**

| N | 800 | 1000 | 2000 | 3000 | 5000 | 7000 |
|---|---|---|---|---|---|---|
| $N_T$ | 50 | 100 | 150 | 200 | 250 | 300 |
| $\beta_{start}$ | 0 | 0 | 0 | 0 | 0 | 0 |
| $\beta_{end}$ | 3 | 3 | 3 | 3 | 3 | 3 |
| $\theta$ | 800 | 1000 | 2000 | 3000 | 5000 | 7000 |
| R | 640 | 640 | 640 | 640 | 640 | 640 |

The simulation results are presented in Tables 2 to 4.

Table 2

| Graph | | | Best Cut (Hit Count) | | | Average Cut | | |
|---|---|---|---|---|---|---|---|---|
| Name | Nodes | BKS | sequential | Jump | Uniform | Sequential | Jump | Uniform |
| G1 | 800 | 11624 | 11624 (84) | 11624 (51) | 11624 (33) | 11621.32 | 11614.42 | 11610.14 |
| G2 | 800 | 11620 | 11620(80) | 11620 (45) | 11620 (32) | 11618.18 | 11612.89 | 11611.3 |
| G3 | 800 | 11622 | 11622 (94) | 11622 (70) | 11622 (52) | 11621.12 | 11618.14 | 11615.89 |
| G4 | 800 | 11646 | 11646 (65) | 11646 (58) | 11646 (31) | 11644.04 | 11642.48 | 11640.16 |
| G5 | 800 | 11631 | 11631 (95) | 11631 (67) | 11631 (53) | 11630.78 | 11627.6 | 11626.72 |
| G6 | 800 | 2178 | 2178 (100) | 2178 (74) | 2178(51) | 2178.0 | 2173.33 | 2170.02 |
| G7 | 800 | 2006 | 2006 (76) | 2006 (21) | 2006 (20) | 2003.58 | 1997.19 | 1995.77 |
| G8 | 800 | 2005 | 2005 (71) | 2005 (42) | 2005 (27) | 2003.05 | 2000.11 | 1997.34 |
| G9 | 800 | 2054 | 2054 (77) | 2054 (37) | 2054 (44) | 2051.68 | 2046.72 | 2046.61 |
| G10 | 800 | 2000 | 2054 (30) | 2000(13) | 2000 (13) | 1996.41 | 1992.34 | 1990.91 |
| G11 | 800 | 564 | 564 (100) | 564 (78) | 564 (6) | 564.0 | 563.56 | 561.04 |

(continued)

| Graph | | | Best Cut (Hit Count) | | | Average Cut | | |
|---|---|---|---|---|---|---|---|---|
| **Name** | **Nodes** | **BKS** | **sequential** | **Jump** | **Uniform** | **Sequential** | **Jump** | **Uniform** |
| G12 | 800 | 556 | 556 (100) | 556 (86) | 556 (22) | 556.0 | 555.72 | 554.2 |
| G13 | 800 | 582 | 582 (100) | 582 (71) | 582 (24) | 582.0 | 581.4 | 579.96 |
| G14 | 800 | 3064 | 3063 (4) | 3063 (4) | 3062 (4) | 3061.03 | 3060.19 | 3059.74 |
| G15 | 800 | 3050 | 3050 (9) | 3050(19) | 3050(16) | 3049.03 | 3048.88 | 3048.42 |
| G16 | 800 | 3052 | 3052(19) | 3052 (7) | 3052(12) | 3050.82 | 3049.09 | 3049.81 |
| G17 | 800 | 3047 | 3047 (2) | 3046 (8) | 3047 (2) | 3044.2 | 3043.11 | 3043.08 |
| G18 | 800 | 992 | 992 (18) | 992 (9) | 992 (12) | 990.65 | 988.88 | 988.47 |
| G19 | 800 | 906 | 906 (88) | 906 (63) | 906 (61) | 905.82 | 905.38 | 905.29 |
| G20 | 800 | 941 | 941 (100) | 941 (86) | 941 (82) | 941.0 | 940.34 | 940.12 |
| G21 | 800 | 931 | 931 (59) | 931 (33) | 931 (48) | 929.87 | 929.1 | 929.54 |

Table 3

| Graph | | | Best Cut (Hit Count) | | | Average Cut | | |
|---|---|---|---|---|---|---|---|---|
| Name | Nodes | BKS | sequential | Jump | Uniform | Sequential | Jump | Uniform |
| G22 | 2000 | 13359 | 13359 (81) | 13359 (70) | 13359 (56) | 13358.81 | 13358.43 | 13357.25 |
| G23 | 2000 | 13344 | 13342 (88) | 13342 (77) | 13342 (57) | 13341.88 | 13341.69 | 13340.36 |
| G24 | 2000 | 13337 | 13337 (100) | 13337 (77) | 13337 (66) | 13337.0 | 13335.63 | 13334.73 |
| G25 | 2000 | 13340 | 13340 (65) | 13340 (25) | 13340(20) | 13338.29 | 13335.37 | 13334.22 |
| G26 | 2000 | 13328 | 13328 (38) | 13328 (24) | 13328 (21) | 13326.73 | 13325.09 | 13324.24 |
| G27 | 2000 | 3341 | 3341 (100) | 3341 (84) | 3341 (70) | 3341.0 | 3340.0 | 3339.04 |
| G28 | 2000 | 3298 | 3298 (100) | 3298 (66) | 3298 (54) | 3298.0 | 3297.05 | 3296.42 |
| G29 | 2000 | 3405 | 3405 (89) | 3405 (37) | 3405 (37) | 3403.88 | 3397.68 | 3397.12 |
| G30 | 2000 | 3413 | 3413 (68) | 3413 (43) | 3413 (34) | 3412.68 | 3412.19 | 3411.5 |
| G31 | 2000 | 3310 | 3310 (67) | 3310 (32) | 3310 (20) | 3309.58 | 3308.51 | 3308.07 |
| G32 | 2000 | 1410 | 1410 (11) | 1410 (4) | 1406 (2) | 1407.78 | 1405.62 | 1399.54 |
| G33 | 2000 | 1382 | 1380 (13) | 1380 (3) | 1374 (6) | 1377.88 | 1376.44 | 1370.32 |
| G34 | 2000 | 1384 | 1384 (41) | 1384 (4) | 1378 (9) | 1382.68 | 1380.42 | 1374.92 |
| G35 | 2000 | 7687 | 7678 (5) | 7676 (2) | 7679 (1) | 7673.8 | 7671.01 | 7671.75 |
| G36 | 2000 | 7680 | 7671 (2) | 7670 (1) | 7669 (3) | 7664.51 | 7662.26 | 7662.61 |
| G37 | 2000 | 7691 | 7682 (3) | 7682 (2) | 7684 (1) | 7676.71 | 7672.92 | 767404 |
| G38 | 2000 | 7688 | 7682 (1) | 7681 (6) | 7681 (3) | 7677.74 | 7675.02 | 7674.95 |
| G39 | 2000 | 2408 | 2408(12) | 2408 (5) | 2408 (1) | 2405.65 | 2401.71 | 2400.53 |
| G40 | 2000 | 2400 | 2399 (1) | 2399 (2) | 2398 (6) | 2394.82 | 2390.26 | 2390.14 |
| G41 | 2000 | 2405 | 2405 (15) | 2405 (5) | 2405 (5) | 2400.93 | 2395.72 | 2395.92 |
| G42 | 2000 | 2481 | 2478 (1) | 2476 (3) | 2477 (1) | 2472.18 | 2466.67 | 2467.4 |

Table 4

| Graph | | | Best Cut (Hit Count) | | | Average Cut | | |
|---|---|---|---|---|---|---|---|---|
| Name | Nodes | BKS | sequential | Jump | Uniform | Sequential | Jump | Uniform |
| G43 | 1000 | 6660 | 6660(100) | 6660 (99) | 6660 (100) | 6660.0 | 6659.98 | 6660.0 |
| G44 | 1000 | 6650 | 6650(100) | 6650 (100) | 6650(100) | 6650.0 | 6650.0 | 6650.0 |
| G45 | 1000 | 6654 | 6654 (100) | 6654 (93) | 6654 (77) | 6654.0 | 6653.72 | 6653.0 |
| G46 | 1000 | 6649 | 6649 (99) | 6649 (81) | 6649 (72) | 6648.99 | 6648.64 | 6648.46 |
| G47 | 1000 | 6657 | 6657(100) | 6657(100) | 6657 (100) | 6657.0 | 6657.0 | 6657.0 |
| G48 | 3000 | 6000 | 6000(100) | 6000 (100) | 6000(100) | 6000.0 | 6000.0 | 6000.0 |
| G49 | 3000 | 6000 | 6000 (100) | 6000(100) | 6000 (100) | 6000.0 | 6000.0 | 6000.0 |
| G50 | 3000 | 5880 | 5878 (25) | 5880(91) | 5874 (8) | 5876.18 | 5875.98 | 5867.58 |
| G51 | 1000 | 3848 | 3847 (21) | 3847 (14) | 3848(2) | 3846.01 | 3845.75 | 3845.69 |
| G52 | 1000 | 3851 | 3850 (1) | 3850 (1) | 3850(5) | 3847.84 | 3847.13 | 3847.07 |
| G53 | 1000 | 3850 | 3850 (1) | 3850(2) | 3849 (2) | 3846.86 | 3846.15 | 3845.91 |
| G54 | 1000 | 3852 | 3851 (8) | 3851(12) | 3851 (6) | 3849.85 | 3849.46 | 3849.31 |
| G55 | 5000 | 10299 | 10268 (3) | 10269 (1) | 10275(1) | 10263.23 | 10260.44 | 10258.65 |
| G56 | 5000 | 4017 | 3985 (4) | 3987(1) | 3987(1) | 3978.34 | 3978.74 | 3977.89 |
| G57 | 5000 | 3494 | 3480(1) | 3474 (1) | 3456 (2) | 3472.8 | 3465.24 | 3447.84 |
| G58 | 5000 | 19293 | 19274(1) | 19245 (1) | 19274(1) | 19235.18 | 19226.84 | 19226.65 |
| G59 | 5000 | 6086 | 6072(1) | 6065 (2) | 6065 (1) | 6055.76 | 6047.23 | 6045.99 |
| G60 | 7000 | 14188 | 14143(1) | 14140 (1) | 14136 (2) | 14130.89 | 14127.86 | 14124.99 |

G1 to G60 in Tables 2 to 4 are instance names ("Name"). "Sequential" indicates the simulation results of the sequential selection MCMC algorithm, "Jump" indicates the simulation results of the jump MCMC algorithm, and "Uniform" indicates the simulation results of the uniform selection MCMC algorithm. In this connection, each value in parentheses in the results of best cut value represents the number of times (hit count) the best cut value was obtained.

In this connection, best-known solutions (BKSs) are taken from the following Reference Literatures 1 to 4, for example.

(Reference Literature 1) Fuda Ma and Jin-Kao Hao, "A multiple search operator heuristic for the max-k-cut problem", Annals of Operations Research, 248(1), pp. 365-403, 2017

(Reference Literature 2) V. P. Shylo, O. V. Shylo, and V. À. Roschyn, "Solving weighted max-cut problem by global equilibrium search", Cybernetics and Systems Analysis, Vol.48, No. 4, pp. 563-567, July, 2012

(Reference Literature 3) Fuda Ma, Jin-Kao Hao, and Yang Wang, "An effective iterated tabu search for the maximum bisection problem", Computers and Operations Research, 81, pp. 78-89, 2017

(Reference Literature 4) Qinghua Wu, Yang Wang, and Zhipeng Lü, "A tabu search based hybrid evolutionary algorithm for the max-cut problem", Applied Soft Computing, 34, pp. 827-837, 2015

The error of each MCMC algorithm in each instance is defined as equation (22).

$$Error = \frac{f_{BKS} - f_{avg}}{f_{BKS}} \qquad (22)$$

In equation (22), $f_{BKS}$ denotes the BKS of an instance, and $f_{avg}$ denotes an average cut value.

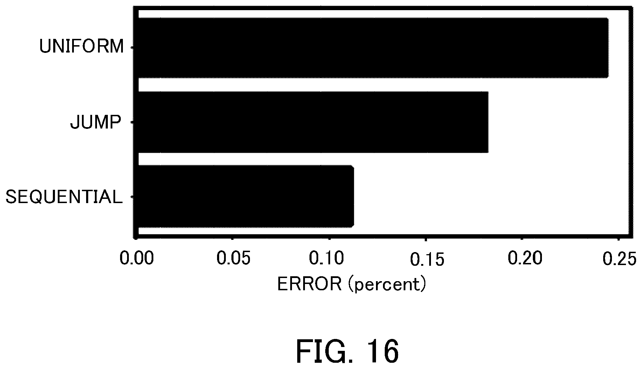

FIG. 16 illustrates an example of calculation results of an average error for the uniform selection MCMC algorithm, jump MCMC algorithm, and sequential selection MCMC algorithm. The horizontal axis represents error (average error) (in units of percent), whereas the vertical axis indicates the three MCMC algorithms.

FIG. 16 presents the average error of each MCMC algorithm on 60 instances listed in Tables 2 to 4. As seen in FIG. 16, the sequential selection algorithm has less average error than the uniform selection MCMC algorithm and jump MCMC algorithm and is more accurate in solving Max-Cut problems.

In addition, in the case where a to-be-described intra-cluster parallel update process is performed, the sequential selection algorithm is easier to implement than the other algorithms.

(Clustering)

N discrete variables (neurons) may include a set of discrete variables that are not coupled to each other.

In the following description, a set of n consecutive discrete variables (neuron set) that are not coupled to each other is referred to as $C = \{x_a, x_{a+1}, ..., x_{a+n}\}$. The non-coupling between the n consecutive discrete variables in the set is represented by equation (23) using a weight coefficient.

$$w_{ij} = 0 \quad a \leq i, j \leq a + n \tag{23}$$

In equation (23), i and j denote the identification numbers of two discrete variables $x_i$ and $x_j$ within C. C is referred to as a non-coupling cluster, or simply a cluster in the following. It is clear from equation (5) that flipping the value of $x_i$ does not affect $\Delta E_j(x)$. Hence, flipping the value of a certain discrete variable in the cluster does not affect the probabilities of flipping the values of the other discrete variables in the cluster.

One of main advantages of the sequential selection MCMC algorithm is that in a parallel trial stage, where the probabilities of flipping the values of all discrete variables are determined, all discrete variables accepted for value flips within the same cluster are updated in parallel in a single trial. Since the uniform selection MCMC algorithm and jump MCMC algorithm randomly propose a discrete variable for a value flip, the discrete variables of consecutive iterations do not always belong to the same cluster, which may be unable to update the discrete variables together in parallel.

In order to detect clusters in a QUBO model problem with a weight coefficient matrix w and a bias coefficient matrix b, a graph coloring problem on w is usable, provided that the same color is assigned to discrete variables that are not coupled to each other.

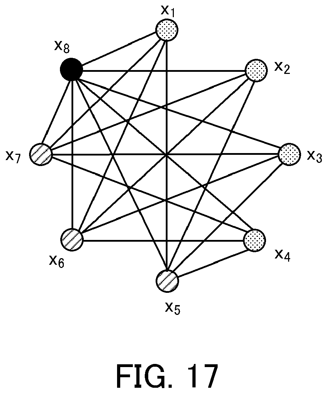

FIG. 17 illustrates an example of clusters.

Referring to the example of FIG. 17, the same color is assigned to $x_1$ to $x_4$, the same color is assigned to $x_5$ to $x_7$, and a different color from those of $x_1$ to $x_7$ is assigned to $x_8$. That is, $x_1$ to $x_4$ belong to a first cluster, $x_5$ to $x_7$ belong to a second cluster, and $x_8$ belongs to a third cluster.

The data processing apparatus 10 of the present embodiment solves a graph coloring problem as preprocessing, using population annealing with the sequential selection MCMC algorithm, to thereby cluster discrete variables (clustering) and detect sets of discrete variables (clusters).

The graph coloring problem is defined in QUBO format with a weight coefficient matrix (w with ^ mark) and a bias coefficient (b with ^ mark) that are defined for preprocessing as equation (24).

$$\widehat{w}_{ij} = \begin{cases} 2 & w_{ij} \neq 0 \\ 0 & w_{ij} = 0 \end{cases} \quad \widehat{b}_i = -1 \quad 1 \leq i, j \leq N \tag{24}$$

The weight coefficient matrix defined as equation (24) penalizes every pair of coupled discrete variables ($w_{ij} \neq 0$) in the QUBO model energy function.

At each iteration of the MCMC algorithm, a cluster of discrete variables that are not coupled is identified by solving the preprocessing QUBO. Then, the weight coefficients relating to this cluster are removed from the weight coefficient matrix. This process is repeated until all clusters are identified. After a desired fraction of discrete variables is assigned to clusters, the rest of the discrete variables are assigned to separate clusters (each discrete variable is assigned to a single cluster).

The removal of weight coefficients relating to a cluster from the weight coefficient matrix and the storing of a new weight coefficient matrix at each iteration cause an additional overhead. To avoid this, the data processing apparatus 10 simply changes the bias coefficients of the discrete variables belonging to the cluster to a large enough number P, which ensures that these discrete variables are not present in a cluster at the next iteration.

According to equation (5), the maximum energy increment by a value flip is expressed by expression (25).

$$\Delta E_j(\mathbf{x}) \le \sum_{i=1}^{N} 2x_i \le 2N \qquad (25)$$

By selecting P satisfying P > 2N, the discrete variables will be zero at the next iteration.

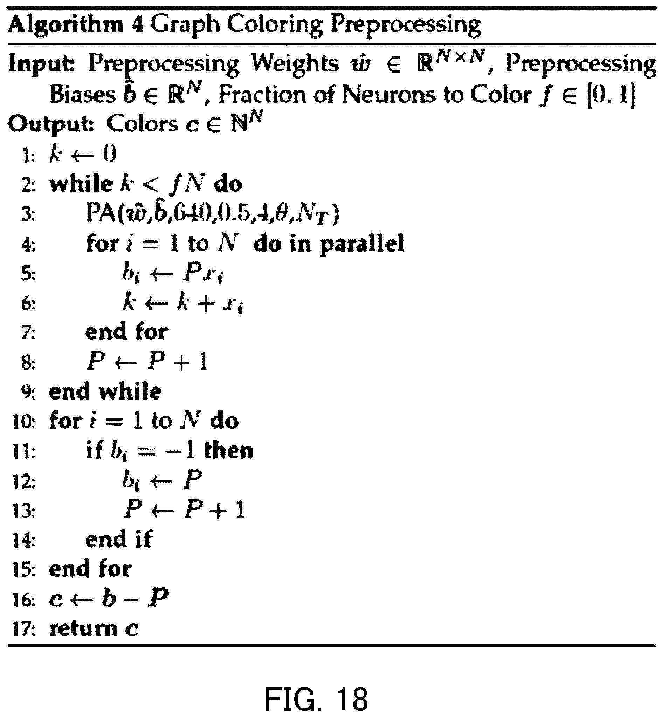

FIG. 18 illustrates an example of a clustering algorithm.

Inputs to the algorithm presented in FIG. 18 are a weight coefficient matrix (N × N real numbers) and bias coefficients (N real numbers) defined for preprocessing as equation (24), and a fraction f (in the range of 0 to 1) of discrete variables (neurons) to be colored. An output is a coloring result (clustering result) c (a set of N natural numbers).

First, k is initialized to zero (line 1) . The operations on lines 3 to 8 are performed while k < fN holds. In this connection, in line 3, the population annealing is performed using the weight coefficient matrix and bias coefficients given by equation (24).

In the example of FIG. 18, parameters used in the population annealing are a replica count R = 640, and a start inverse temperature $\beta_{start}$ = 0.5 and an end inverse temperature $\beta_{end}$ = 4 that are values experimentally found to work well in most cases. In addition, the parameters used in the population annealing are a predetermined number of times θ defining a resampling cycle and a temperature parameter count $N_T$. $N_T\theta$ indicates the number of iterations of an MCMC algorithm. $N_T\theta$ is set to be small enough to be negligible compared to the iterations to solve the original QUBO problem, in order to reduce the overhead of the preprocessing. $N_T$ = 10 and θ = N were used in experimental examples to be described later.

The operations on lines 5 and 6 are performed in parallel for i = 1 to N. In line 5, $b_i$ is updated to $Px_i$, and in line 6, k is updated to k + $x_i$.

When i has reached N, P is incremented by one (line 8). Which color is assigned to each discrete variable (which cluster is assigned) is determined according to P.

If k ≥ fN, the operations on lines 11 to 14 are performed for i = 1 to N. In lines 11 to 14, if $b_i$ is equal to -1, then $b_i$ is updated to P and P is incremented by one.

When i has reached N, b - P is substituted for c (c, b, and P are each a column vector with N elements) (line 16), and c is returned to the calling function (line 17).

The following summarizes the procedure for the clustering performed by the data processing apparatus 10 of the present embodiment, using a flowchart.

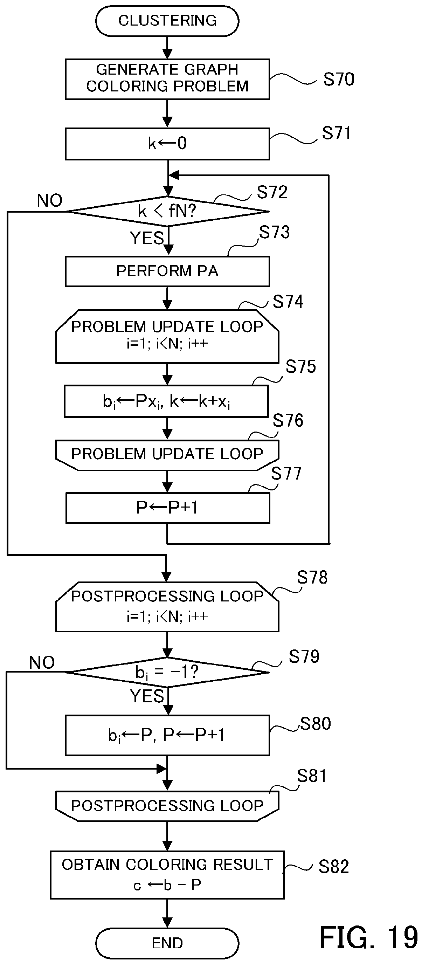

FIG. 19 is a flowchart illustrating an example of a procedure for the clustering. FIG. 19 illustrates a processing flow based on the clustering algorithm presented in FIG. 18.

First, the processing unit 12 generates a graph coloring problem (step S70). The graph coloring problem is defined in QUBO format, as described earlier, and is generated by obtaining a weight coefficient matrix and bias coefficients for preprocessing using equation (24).

Then, the processing unit 12 initializes k to zero (step S71), and determines whether k < fN (step S72). If k < fN, the processing unit 12 executes step S73. If k < fN is not obtained, the processing unit 12 executes step S78.

At step S73, the processing unit 12 performs population annealing (referred to as PA in FIG. 19) using the weight coefficient matrix and bias coefficients given by equation (24). Then, the processing unit 12 repeats a problem update loop (steps S74 to S76) from i = 1 until i < N while incrementing i by one.

In the problem update loop, the processing unit 12 updates $b_i$ to $Px_i$ and k to k + $x_i$ (step S75). If i has not reached N after step S75, the processing unit 12 increments i by one and repeats step S75.

When i has reached N, the processing unit 12 increments P by one and repeats step S72 and subsequent steps.

If k < fN is not obtained, the processing unit 12 performs a postprocessing loop (steps S78 to S81) from i = 1 until i < N while incrementing i by one.

In the postprocessing loop, the processing unit 12 determines whether $b_i$ is equal to -1 (step S79). If $b_i$ is equal to -1, the processing unit 12 updates $b_i$ to P and increments P by one (step S80). If $b_i$ is not equal to -1 or if i has not reached N after step S80, the processing unit 12 increments i by one and repeats step S79 and subsequent steps.

When i has reached N, the processing unit 12 substitutes b - P for c (c, b, P are each a column vector with N elements) to thereby obtain a coloring result c (step S82). The clustering is now complete.

In this connection, the processing order of FIG. 19 is an example and may be changed where appropriate.

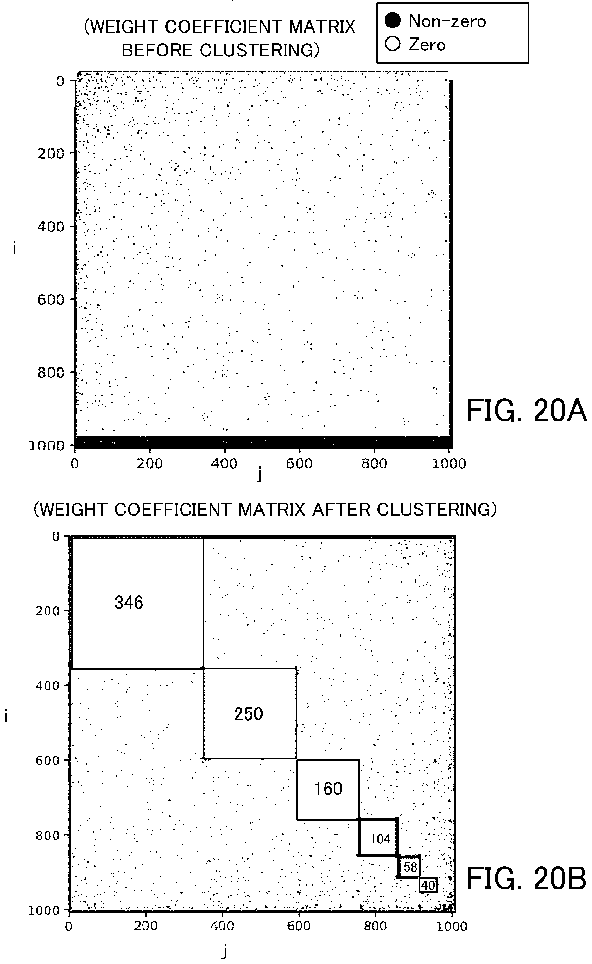

FIGS. 20A and 20B illustrate examples of a weight coefficient matrix before and after clustering. FIGS. 20A and 20B each illustrate a weight coefficient matrix of G54, which is an instance of a Max-Cut problem with N = 1000. Weight coefficients other than zero are represented in black, and weight coefficients of zero are represented in white. The weight coefficient matrix after clustering is reordered such that the identification numbers (i or j) of discrete variables in the same cluster are positioned adjacent to each other.

In this connection, in the implementation as illustrated in FIG. 13, eight discrete variables that are not coupled to the other discrete variables are added so that clustering is performed with v = 16. Therefore, each of i and j is 1008 at maximum. For the clustering, the algorithm presented in FIG. 18 was run with $N_T$ = 10, θ = N = 1008, and f = 0.99.

As a result of the clustering, in addition to six clusters respectively including 346, 250, 160, 104, 58, and 40 discrete variables as illustrated in FIG. 20B, three clusters, not illustrated, are identified through steps S72 to S77 of FIG. 19. After that, nine discrete variables that do not belong to any cluster are obtained. These discrete variables are identified as different clusters through steps S78 to S81 of FIG. 19.

The above-described sequential selection MCMC algorithm is extendable to the following algorithm (referred to as clustered sequential selection MCMC algorithm) using the clustering result as described above.

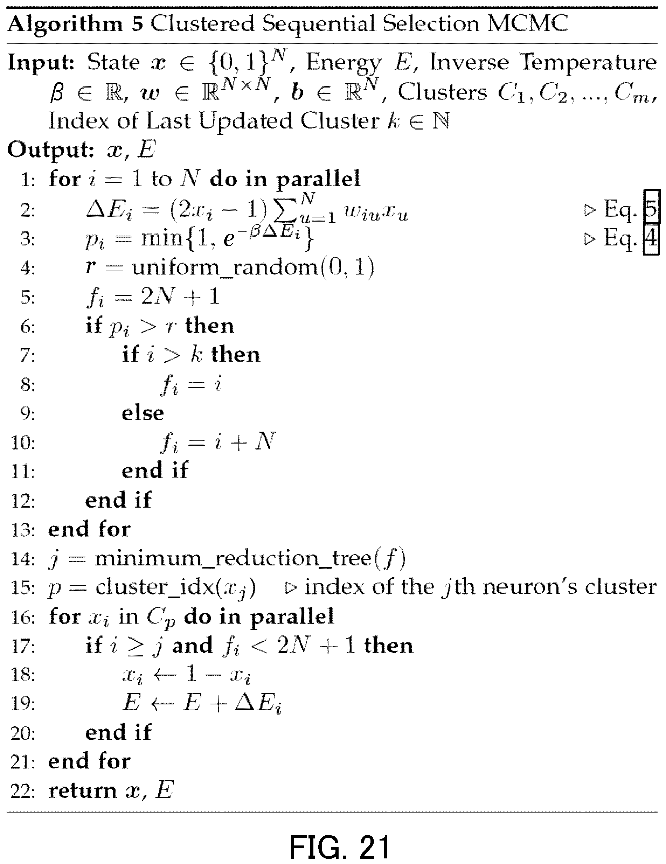

FIG. 21 illustrates an example of a clustered sequential selection MCMC algorithm.

Inputs are a state x, energy E, an inverse temperature β, a weight coefficient matrix w, a bias coefficient matrix b, information on m clusters $C_1$ to $C_m$ (for example, the identification numbers of discrete variables belonging to each cluster), and the identification number (index) k of a last updated cluster. Outputs are a state x and energy E.

The operations on lines 1 to 14 are performed in the same manner as in the sequential selection MCMC algorithm presented in FIG. 10.

In line 15, the identification number p of a cluster to which $x_j$ belongs is obtained. Then, the operations on lines 17 to 20 are performed on all $x_i$ belonging to the cluster $C_p$ in parallel.

In lines 17 to 20, if i ≥ j and $f_i$ < 2N + 1, $x_i$ is updated to 1 - $x_i$, and E is updated to E + $\Delta E_i$. In this connection, in the case where the local fields given by equation (13) are used, the local fields are updated accordingly.

The following summarizes the procedure for the clustered sequential selection MCMC algorithm by the data processing apparatus 10 of the present embodiment, using a flowchart.

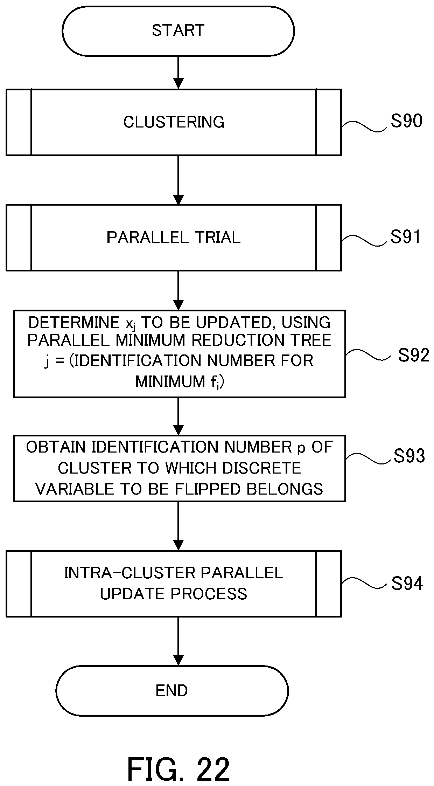

FIG. 22 is a flowchart illustrating an example of a procedure for the clustered sequential selection MCMC algorithm. FIG. 22 illustrates a clustering step and a processing flow based on the clustered sequential selection MCMC algorithm presented in FIG. 21.

The processing unit 12 performs clustering as illustrated in FIG. 19 (step S90). Then, in the data processing apparatus 10 that performs population annealing, the replica processing units 12a1 to 12aR in the processing unit 12 individually perform the following process.

The replica processing units 12a1 to 12aR perform a parallel trial (step S91). The parallel trial is performed in the same manner as steps S50 to S58 of FIG. 12. Then, the replica processing units 12a1 to 12aR execute step S92 that is the same as step S59 of FIG. 12.

The replica processing units 12a1 to 12aR obtain the identification number p of a cluster to which $x_j$ whose value is to be flipped belongs (step S93). Then, the replica processing units 12a1 to 12aR perform an intra-cluster parallel update process (step S94), and ends one iteration of the clustered sequential selection MCMC algorithm. The second and subsequent iterations are executed starting at step S91.

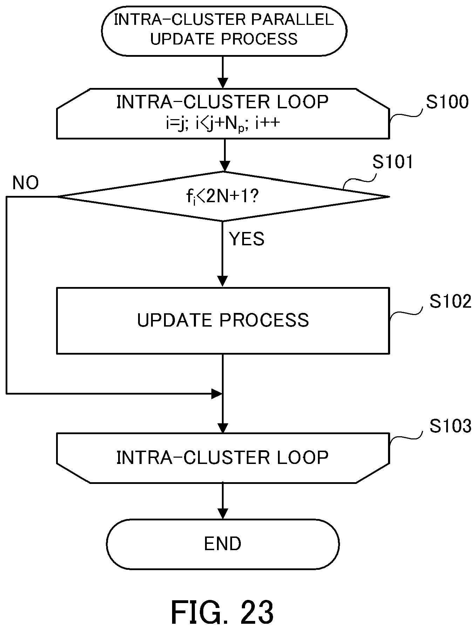

FIG. 23 is a flowchart illustrating an example of a procedure for the intra-cluster parallel update process. FIG. 23 illustrates a processing flow based on the clustered sequential selection MCMC algorithm presented in FIG. 21.

The replica processing units 12a1 to 12aR execute an intra-cluster loop (steps S100 to S103) from i = j until i < J + $N_p$ while incrementing i by one. Here, $N_p$ denotes the number of $x_i$ included in a cluster $C_p$.

The replica processing units 12a1 to 12aR determine whether $f_i$ < 2N + 1 (step S101). If $f_i$ < 2N + 1, the replica processing units 12a1 to 12aR perform an update process (step S102). In the update process, $x_i$ is updated to 1 - $x_i$, and E is updated to E + $\Delta E_i$. In this connection, the local fields given by equation (13) are updated according to the update of $x_i$.

When i has reached j + $N_p$, the intra-cluster parallel update process is completed.

In this connection, in FIG. 23, the replica processing units 12a1 to 12aR execute steps S100 to S103 for a plurality of i in parallel.

(Experimental Examples)

The following presents experimental results for verifying the effects of the clustered sequential selection MCMC algorithm.

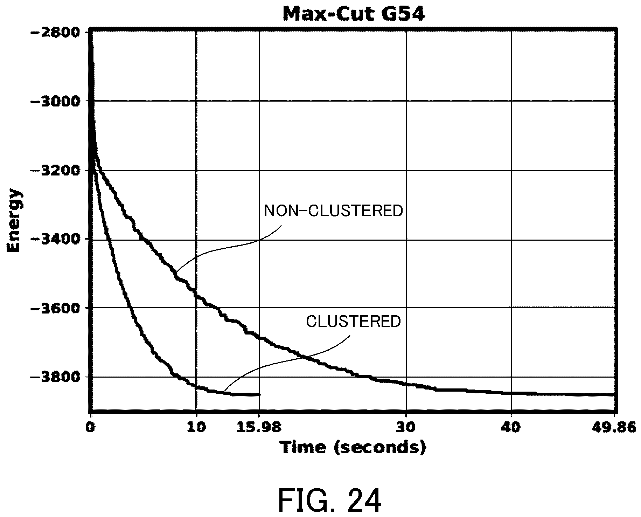

FIG. 24 illustrates simulation results of a Max-Cut problem using the clustered and non-clustered sequential selection MCMC algorithms. The horizontal axis represents time (seconds), whereas the vertical axis represents energy.

In this experimental example, a Max-Cut instance G54 is used. The number of nodes is N = 1008. The calculation conditions in population annealing include a replica count R = 640, a start inverse temperature $\beta_{start}$ = 0, an end inverse temperature $\beta_{end}$ = 3, a temperature parameter count $N_T$ = 1000, and a predetermined number of times θ = 8192 defining a resampling cycle. Each of the clustered and non-clustered sequential selection algorithms was run five times. The relations between average energy and time are plotted in FIG. 24.

The clustered sequential selection MCMC algorithm produces the same result (the same lowest energy) as the non-clustered sequential selection MCMC algorithm, but achieves a speedup of up to three times faster to obtain the result than the non-clustered sequential selection MCMC algorithm.

The following presents experimental results for a speedup of the clustered sequential selection MCMC algorithm against the non-clustered sequential selection MCMC algorithm, on some more instances. In this connection, for the clustering, $N_T$ = 10 and $\theta$ = N were used in calculation of all instances. $t_{pp}$, $t_{ss}$, and $t_{css}$ denote the runtimes of the clustering (preprocessing), (non-clustered) sequential selection MCMC algorithm, and clustered sequential selection MCMC algorithm, respectively. The speedup is calculated from equation (26).

$$speedup = \frac{t_{ss}}{t_{pp} + t_{css}} \qquad (26)$$

All instances were run with the same calculation conditions as used for obtaining the experimental results presented in FIG. 24.

Table 5

| Graph | N | Edges | $t_{pp}$ | $t_{ss}$ | $t_{css}$ | speedup |
|---|---|---|---|---|---|---|
| G14 | 800 | 4694 | 0.20 | 33.94 | 11.32 | 2.94 |
| G15 | 800 | 4661 | 0.19 | 33.22 | 12.25 | 2.67 |
| G16 | 800 | 4672 | 0.24 | 29.60 | 12.17 | 2.38 |
| G17 | 800 | 4667 | 0.19 | 27.95 | 11.77 | 2.33 |
| G18 | 800 | 4694 | 0.24 | 30.36 | 13.52 | 2.20 |
| G23 | 2000 | 19990 | 0.41 | 250.48 | 140.45 | 1.77 |
| G26 | 2000 | 19990 | 0.41 | 247.89 | 149.52 | 1.65 |
| G32 | 2000 | 4000 | 0.16 | 137.93 | 58.88 | 2.33 |
| G33 | 2000 | 4000 | 0.12 | 138.70 | 64.50 | 2.14 |
| G35 | 2000 | 11778 | 0.50 | 135.98 | 64.87 | 2.08 |
| G40 | 2000 | 11766 | 0.49 | 155.81 | 73.91 | 2.09 |
| G51 | 1000 | 5909 | 0.27 | 46.85 | 15.11 | 3.04 |
| G52 | 1000 | 5916 | 0.22 | 47.23 | 14.67 | 3.17 |
| G53 | 1000 | 5914 | 0.27 | 47.53 | 15.15 | 3.08 |
| G54 | 1000 | 5916 | 0.15 | 49.36 | 15.93 | 3.06 |
| G57 | 5000 | 10000 | 1.08 | 846.33 | 315.36 | 2.67 |
| **Min** | 800 | 4000 | 0.12 | 27.95 | 11.32 | 1.65 |
| **Max** | 5000 | 19990 | 1.08 | 846.33 | 315.36 | 3.17 |

Table 5 presents experimental results for the speedup of the clustered sequential selection MCMC algorithm against the non-clustered sequential selection MCMC algorithm, on a plurality of instances selected from the instances listed in Tables 2 to 4. In this connection, $t_{pp}$, $t_{ss}$, and $t_{css}$ are expressed in seconds. As seen in Table 5, the clustering leads to a speedup of 1.65 to 3.17 times in all instances.

(Comparison of Population Annealing Method with Other MCMC Algorithms)

In the following, a simulated annealing method (hereinafter, referred to as "SA") and a parallel tempering method (hereinafter, referred to as "PT") are used as other MCMC algorithms. In addition, the population annealing method is referred to as "PA" hereinafter.

Unlike the Metropolis algorithm in which a fixed temperature is used, SA starts sampling from a distribution at a sufficiently high temperature ($\beta_{start}$) so that the algorithm does not get stuck in a local minimum. After each MCMC iteration, the temperature is lowered according to a predefined annealing schedule. This process is repeated until the

final temperature ($\beta_{end} > \beta_{start}$) is reached, and the state of the Boltzmann Machine is frozen.

Although SA is not originally a population-based approach, SA is usually run with R independent runs or with R replicas in parallel, in order to enable a fair comparison with the other population-based algorithms, PT and PA. It is expected that at least one global minimum state will be found. Here, R is a population size (equivalent to the replica count in PA and PT). In SA, if a state gets stuck in a local minimum at a temperature, it is highly likely that the state will remain there until the end of the simulation, because to lower the temperature makes it harder to escape from the local minimum.

In PT, R replicas of the Boltzmann machine are run in parallel. Each replica performs MCMC sampling at a different fixed temperature selected according to a predefined temperature ladder. After each MCMC iteration, replicas at neighboring temperatures propose to swap their temperatures. A swap acceptance probability (SAP) is given by equation (27) .

$$SAP(\beta_i, \beta_j) = min\{1, e^{(\beta_i - \beta_j)(E^{(i)} - E^{(j)})}\} \qquad (27)$$

In equation (27), i and j are the identification numbers of two replicas with neighboring temperatures, and $E^{(i)}$ represents the energy of a replica with identification number i. A temperature swap allows a replica that is stuck in a local minimum to ascend to a higher temperature and to escape from the local minimum. However, since each replica has a different temperature, the replica count R directly affects the temperature ladder. In the case where $\beta_{start}$ and $\beta_{end}$ are fixed, to increase R leads to a smaller temperature difference between replicas at neighboring temperatures and SAP becomes closer to one. When SAP approaches one, a temperature swap between replicas is likely to be accepted, regardless of the energy difference between the replicas. This causes an insufficient swap move. An optimal way to increase R is to have k-independent PT runs in parallel, in which each PT runs r replicas (R = kr) such that r is not too large to decrease the performance.

Unlike the above PT, a plurality of replicas in PA are independent of the selection of temperatures. That is, with fixed $\beta_{start}$ and $\beta_{end}$, to increase R does not affect the gaps between temperatures. Since it is possible to arbitrarily increase R, PA is a more scalable algorithm for massively parallel hardware.

(Application to Three Different Combinatorial Optimization Problems)

The following deals with a quadratic assignment problem (QAP), a Max-Cut problem, and a traveling salesman problem (TSP).

QAP is a problem that assigns n facilities to n locations (each facility to one location) such that the sum of the products of distances between the locations and flows between the facilities is minimized. The evaluation function (energy function) of QAP is represented by equation (28).

$$E(\mathbf{x}) = \sum_{(i,k,j,l)} f_{ij} d_{kl} x_{ik} x_{jl} + P \sum_i (1 - \sum_k x_{ik})^2 \qquad (28)$$
$$+ P \sum_k (1 - \sum_i x_{ik})^2 \quad 1 \le i, j, k, l \le n$$

In equation (28), $x_{ik}$ is a Boolean variable indicating whether the i-th facility is assigned to the k-th location. P is a large enough value to penalize states that violate the constraints that each facility needs to be assigned to one location and that each location needs to be assigned to one facility.

The Max-Cut problem has been described earlier using equation (21) and others.

TSP is a problem that aims to visit n cities, each city once, and return to the first city such that the total distance traveled is minimized. The evaluation function (energy function) of TSP is represented by equation (29).

$$E(x) = \sum_{(i,k,j,l)} d_{ij} x_{ik} x_{jl} + P \sum_i \left(1 - \sum_k x_{ik}\right)^2 \qquad (29)$$

$$+ P \sum_k \left(1 - \sum_i x_{ik}\right)^2 \quad 1 \le i, j, k, l \le n$$

In equation (29), $x_{ik}$ indicates whether a city i is the k-th visited city, and $d_{ij}$ denotes the distance between cities i and j. P is a large enough value to penalize states that violate the constrains that each city needs to be visited once and that each city has one position in the order of visited cities.

Equations (28) and (29) are transformable to equation (1). In this case, the number of $x_i$, i.e., N in equation (1) is $n^2$.

As mentioned earlier, the population size of SA may refer to the replica count indicating how many replicas are run in parallel. In the case where a single replica in SA is able to find a solution to a problem within a certain number of iterations with a probability of $P_{SA}(1)$, a probability $P_{SA}(R)$ that is defined as a success probability of R replicas is represented by equation (30). This success probability is a probability that at least one replica finds the optimal solution.

$$P_{SA}(R) = 1 - (1 - P_{SA}(1))^R \qquad (30)$$

Since PT performs a duplication k times with a temperature ladder size of r, a success probability $P_{PT}(R)$ is given by equation (31).

$$P_{PT}(R) = 1 - (1 - P_{PT}(r))^k \qquad (31)$$

In equation (31), $P_{PT}(R)$ denotes a success probability when k = 1, that is, a success probability that at least one of the R replicas finds the optimal solution.

The behavior of PA is different from those of SA and PT, and the performance of PA is experimentally measured using different problems. In the case where massively parallel hardware with a large number of processor cores is used as the processing unit 12, for example, PA exhibits higher performance than SA and PT. That is, the success probability $P_{PA}(R)$ of PA is expected to be represented by expression (32).

$$P_{PA}(R) \ge 1 - (1 - P_{PA}(1))^R = P_{SA}(R) \qquad (32)$$

In expression (32), $P_{PA}(1) = P_{SA}(1)$ because the resampling process is neutral with a single replica.

(Experiments on QAP)

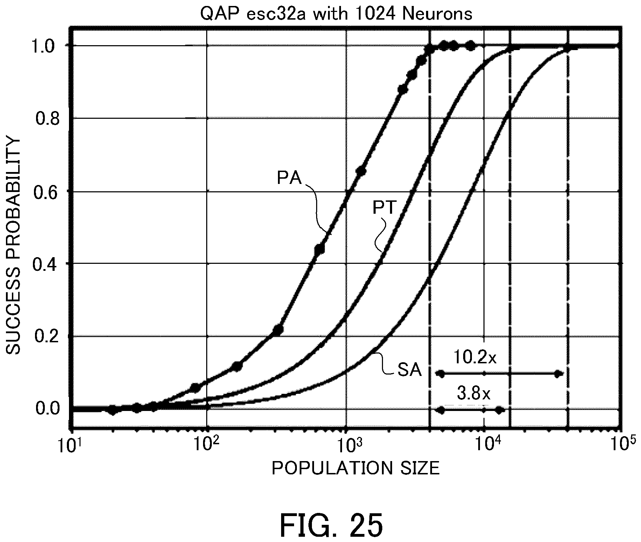

FIG. 25 illustrates simulation results for the performance of SA, PT, and PA on QAP. The horizontal axis represents population size, whereas the vertical axis represents success probability.

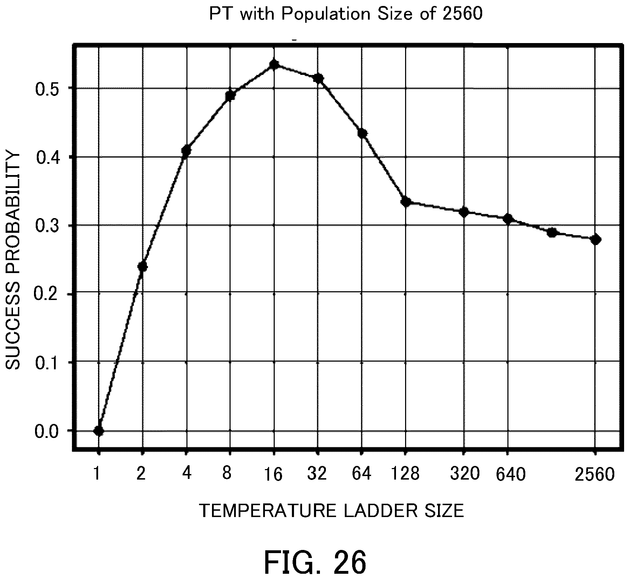

In addition, FIG. 26 illustrates the relationship between temperature ladder size and success probability in PT. The horizontal axis represents temperature ladder size, whereas the vertical axis represents success probability. In this connection, the population size is 2560 in FIG. 26.

The instances used are esc32 instances taken from QAPLIB, a standard QAP benchmark library (see Rainer E. Burkard, Stefan E. Karisch, and Franz Rendl, "QAPLIB -a quadratic assignment problem library", Journal of Global Optimization, 10(4), pp. 391-403, 1997).

In this case, n = 32, N = 1024, and the optimal solution is known. All of SA, PT, PA were performed with $5 \times 10^5$ MCMC iterations per replica and with $\beta_{start} = 0$ and $\beta_{end} = 1.5$.

The PT results are presented for temperature ladder size r = 16. This is experimentally found to be the optimal configuration, as seen in FIG. 26. Success probabilities for SA and PT were measured with R = 2560 in 200 runs. The success probabilities respectively fit equations (30) and (31). In the case of PA, the success probability was measured with different population sizes in 200 runs.

As seen in FIG. 25, SA, PT, and PA exhibit similar performance at small population sizes. However, as the population size increases, PA improves more the performance than SA and PT and achieves the success probability given by expression (32).

The population size at which the success probability becomes 99% in PA is 3.8 times less than that in PT and 10.2 times less than that in SA.

(Experiments on Max-Cut Problems)

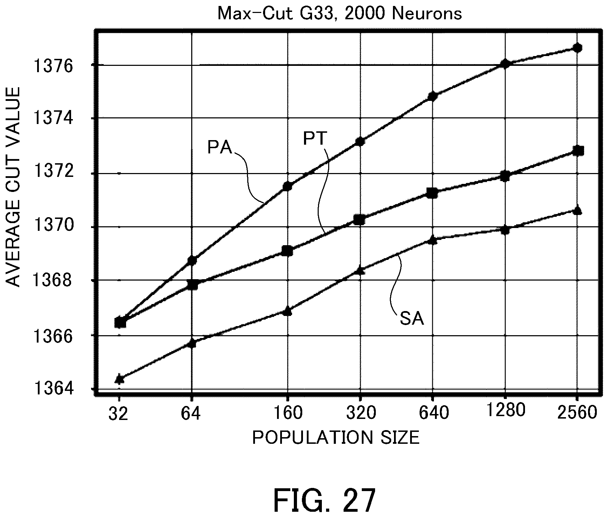

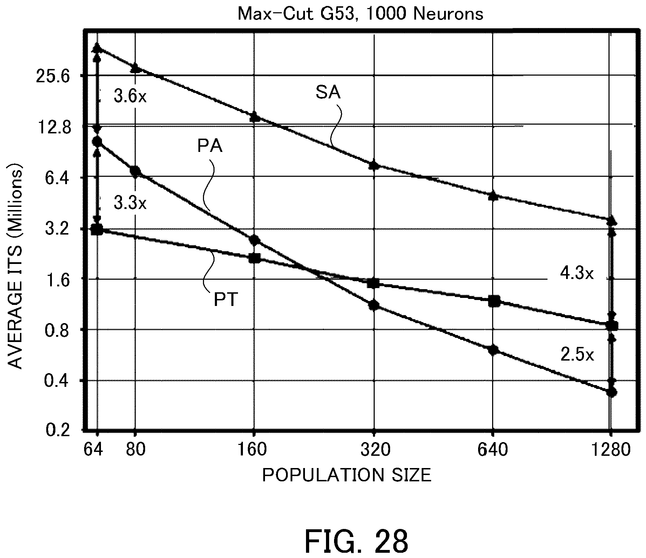

FIG. 27 illustrates simulation results for the performance of SA, PT, and PA on a Max-Cut problem (G33) . The horizontal axis represents population size, whereas the vertical axis represents average cut value.
In addition, FIG. 28 illustrates simulation results for the performance of SA, PT, and PA on a Max-Cut problem (G53). The horizontal axis represents population size, whereas the vertical axis represents average iterations to solution (ITS), i.e., the number of MCMC iterations to obtain the best known-solution (BKS) .
G33 and G53 instances are taken from the aforementioned "Gset Max-Cut Library." These instances are benchmarked by the above-listed Reference Literature 1. G33 has N = 2000 and G53 has N = 1000. The BKSs of G33 and G53 are also taken from Reference Literature 1.
$\beta_{start}$ = 0.2 and $\beta_{end}$ = 3.5 were set for both instances, and r = 32 was set as the temperature ladder size of PT.
FIG. 27 represents the average cut value detected in 100 runs (with $3 \times 10^5$ MCMC iterations) in SA, PT, and PA. As the population size increases, the average cut value gets closer to the BKS. However, PA exhibits higher performance because it is able to escape from local minimum states more efficiently.
In FIG. 28, PT exhibits better performance and is approximately 3.3 times faster than PA at a small population size (R = 64). However, as the population size increases, the average ITS of PA decreases more rapidly than that of PT. When the population size is 320, PA is faster than PT. When the population size is 1280, PA is 2.5 times faster than PT and 10.8 times faster than SA.

(Experiments on TSP)

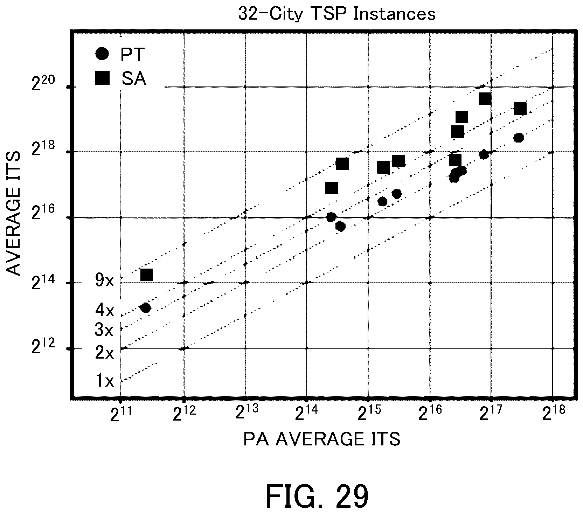

FIG. 29 illustrates simulation results for the performance of SA, PT, and PA on TSP. The horizontal axis represents average ITS in PA, whereas the vertical axis represents average ITS value.
FIG. 29 illustrates the average ITS values in 10 randomly generated TSP instances with 32 cities (N = 1024). BKS is a value verified using a known TSP solver. In this experiment, all instances were run with R = 1280, an optimal temperature ladder size, and the same $\beta_{start}$ and $\beta_{end}$.
As seen in FIG. 29, PA outperforms SA and PT in all 10 instances, and is up to 4 times faster than PT and up to 9 times faster than SA.
As described earlier, the data processing apparatus 10 of the present embodiment solves combinatorial optimization problems using PA, which exhibits better performance as described above. As described with reference to FIG. 5, the data processing apparatus 10 of the present embodiment eliminates the need of re-calculating the local fields for a duplicate replica at each iteration of the resampling process. This reduces the computational cost even when the population size (replica count) R is large, with which PA obtains a more significant performance improvement than SA and PT, and increases the computational efficiency and improves problem solving performance.

(Verification of Effects Using Data Processing Apparatus 10)

The following presents the results of verifying the effects using the data processing apparatus 10.
In the following verification, the data processing apparatus 10 configured as illustrated in FIG. 13 is used. In addition, a GPU with 80 SMs is used as the processing unit 12. Each SM has 64 processor cores that are able to execute instructions in parallel.
An algorithm (hereinafter, referred to as a parallel population-based Boltzmann machine (PBBM) algorithm) used in this verification will now be presented.

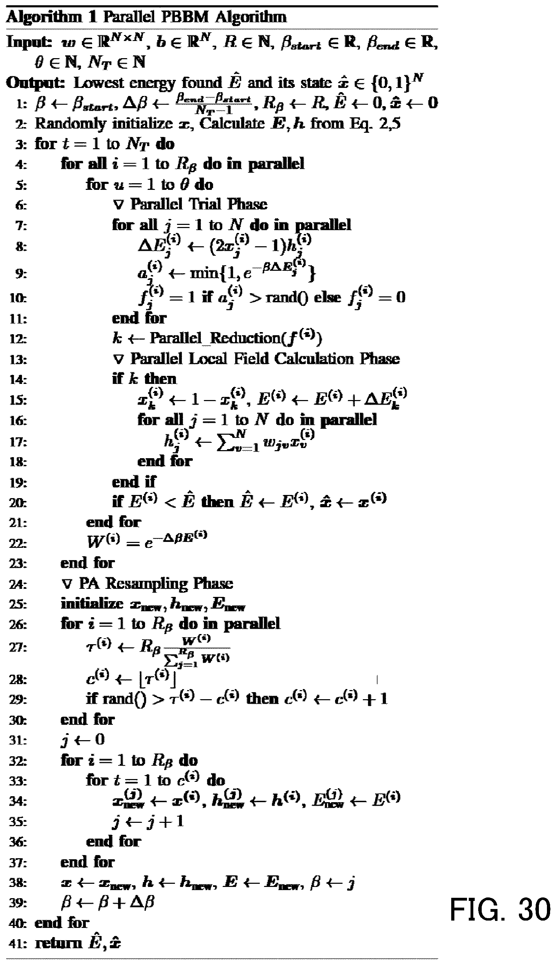

FIG. 30 illustrates an example of the PBBM algorithm.
Inputs are the same as in the PA algorithm presented in FIG. 3. Outputs are the lowest energy found and the state with the lowest energy. The processing of the PBBM algorithm is summarized as follows.
Starting at $\beta_{start}$, $R_\beta$ replicas are run in parallel at respective temperatures. To avoid rejecting proposed MCMC moves and obtain a significant speedup for each iteration, the parallel MCMC algorithm is used for each replica. Instead of proposing a single discrete variable for a value flip and evaluating whether to accept the value flip, whether to accept a value flip is evaluated in parallel for all discrete variables. Then, one of the discrete variables accepted for value flips is randomly selected.
A flag vector $f^{(i)}$ that is used for the i-th replica indicates whether each discrete variable has been accepted for a value flip. More specifically, $f_j^{(i)}$ = 1 indicates that the discrete variable $x_j$ of the i-th replica has been accepted for a value flip, and $f_j^{(i)}$ = 0 indicates that the discrete variable $x_j$ has been rejected for a value flip.
A parallel reduction algorithm represented with "Parallel_Reduction" is run with the flag vector $f^{(i)}$, and returns

the identification number = k (when $f_k^{(i)}$ = 1 exists). The above-described parallel minimum reduction tree is used as the parallel reduction algorithm.

After the value of $x_j$ is flipped, the local fields of the discrete variables in each replica are calculated (updated) in parallel according to equation (13). After running θ MCMC iterations at each temperature, β is increased by Δβ, and resampling is performed on the replicas. The number of copies of each replica is calculated in parallel according to equation (11). Then, the state and local fields of each replica are replaced by new values.

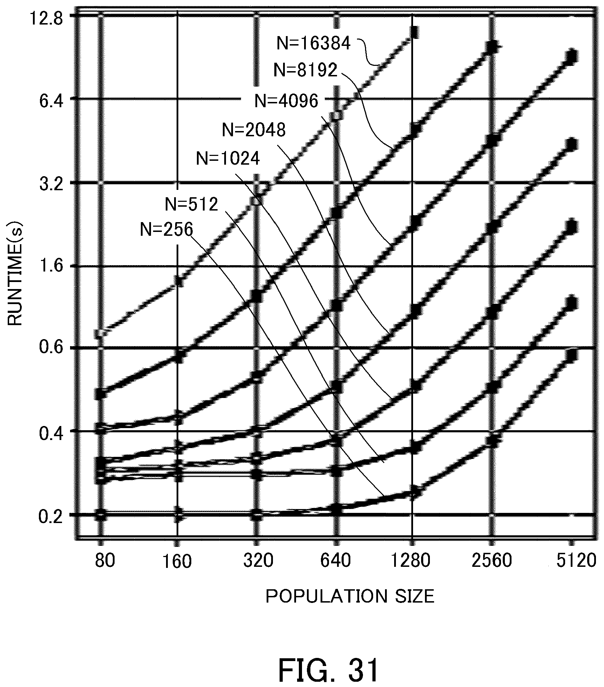

FIG. 31 illustrates the relationship between runtime for $10^5$ MCMC iterations per replica and population size. The horizontal axis represents population size, whereas the vertical axis represents runtime.

In this connection, FIG. 31 illustrates the relationship between runtime and population size with respect to a plurality of different Boltzmann sizes N (the number of discrete variables). In the case where N is 1024 or greater, v in FIG. 13 is set to v =16. In the case where N is less than 1024, v is set to v = 8.

As seen in FIG. 31, in the case where N is 1024 or less, a population size (replica count) of up to 640 has only 27% longer runtime at maximum than a population size of 80.

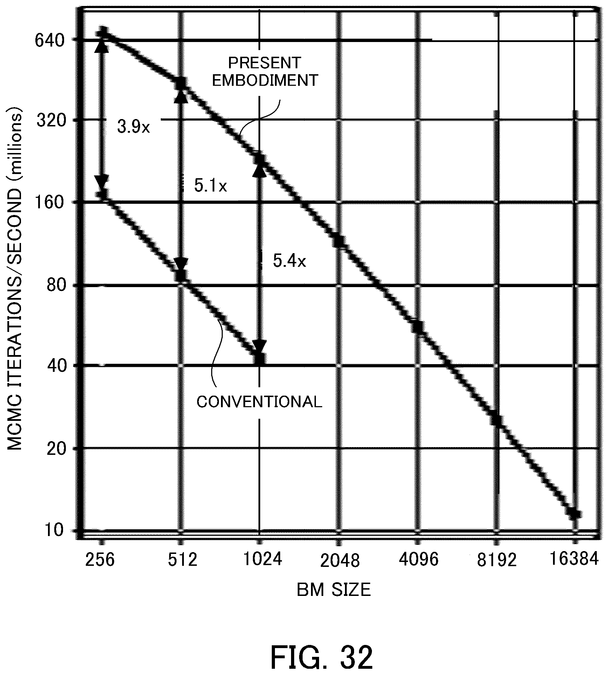

FIG. 32 illustrates the peak number of MCMC iterations that may be run in a second in the whole population. The horizontal axis represents Boltzmann size (the number of discrete variables), whereas the vertical axis represents the number of MCMC iterations per second.

In FIG. 32, for comparison, the peak number reported in Non-Patent Literature 8 (an FPGA implementation of PT with parallel trial) that is able to deal with a Boltzmann size of N ≤ 1024 is indicated by "Conventional." Both PA resampling and PT swap moves have negligible overhead, and the main performance criteria is how many MCMC iterations may be run in a second.

(Comparison Example of Performance with Other Solvers on Various Max-Cut Instances)

In this experimental example, Max-Cut instances from the aforementioned "Gset Max-Cut Library" are used as benchmarks.

The following presents the comparison results with the Max-Cut solvers of the following Literatures A to G that report the average time to reach BKSs.

Literature A (the same as the above-listed Reference Literature 1): Fuda Ma and Jin-Kao Hao, "A multiple search operator heuristic for the max-k-cut problem", Annals of Operations Research, 248(1), pp. 365-403, 2017

Literature B (the same as the above-listed Reference Literature 4): Qinghua Wu, Yang Wang, and Zhipeng Lü, "A tabu search based hybrid evolutionary algorithm for the max-cut problem", Applied Soft Computing, 34, pp. 827-837, 2015

Literature C (the same as the above-listed Reference Literature 3): Fuda Ma, Jin-Kao Hao, and Yang Wang, "An effective iterated tabu search for the maximum bisection problem", Computers Operations Research, 81, pp. 78-89, 2017

Literature D (the same as the above-listed Reference Literature 2): V. P. Shylo, O. V. Shylo, and V. À. Roschyn, "Solving weighted max-cut problem by global equilibrium search", Cybernetics and Systems Analysis, Vol.48, No. 4, pp. 563-567, July, 2012

Literature E: A. Yavorsky et al., "Highly parallel algorithm for the Ising ground state searching problem", arXiv:1907.05124v2 [quant-ph] 16 July, 2019

Literature F: Yu Zou and Mingjie Lin, "Massively simulating adiabatic bifurcations with FPGA to solve combinatorial optimization", FPGA '20: Proceeding of the 2020 ACM/SIGDA International Symposium on Field-Programmable Gate Arrays, February, 2020

Literature G: Chase Cook et al., "GPU-based Ising computing for solving max-cut combinatorial optimization problems", Integration, the VLSI Journal, 69, pp. 335-344, 2019

These solvers and their platforms are summarized in Table 6.

Table 6

| Ref. | Name | Algorithm | Type | Plattform |
|---|---|---|---|---|
| Present Embodiment | PBBM | Bolzmann Machine with Population Annealing | 1 | CPU |
| Present Embodiment | PBBM | Bolzmann Machine with Population Annealing | 1,2 | GPU |
| Literature A | MOH | Multiple Operator Heuristic | 1 | CPU |
| Literature B | TSHEA | Hybrid Tabu Search and Evolutionary | 1 | CPU |

(continued)

| Ref. | Name | Algorithm | Type | Plattform |
|------|------|-----------|------|-----------|
| Literature C | ITS | Iterated Tabu Search | 1 | CPU |
| Literature D | GES | Global Equilibrium Search | 1 | CPU |
| Literature E | MARS | Mean-Field Annealing from Random State | 2 | GPU |
| Literature F | SB | Simulated Bifurcation | 2 | FPGA |
| Literature G | SA | Simulated Annealing | 2 | GPU |

Table 6 presents the name, algorithm, type, and platform (CPU, GPU, or FPGA) of each solver, which is used in experimental examples described below, with respect to the above Literatures A to G. In this connection, the name of a solver used in the present embodiment is "PBBM." In addition, for a fair comparison with the other solvers, the CPU implementation for PBBM, in addition to the GPU implementation for PBBM, is used.

The type has two types: type 1 and type 2. The type 1 is a type of solver that took sufficient runtime to reach BKSs and reported its results. The type 2 is a type of solver that took short runtime (less than one second in most cases) and reported the average cut value.

To evaluate the performance of each solver, the average time to best-known solution (TTS) in 20 runs was measured for each instance. In this connection, the calculation was made for G1-G54 instances that have N ≤ 3000 among the instances of "Gset Max-Cut Library."

In PBBM, all instances were run with $\beta_{start}$ = 0.2, $\beta_{end}$ = 3.5, R = 640 (in the case of GPU implementation), R = 100 (in the case of CPU implementation), and a linear $\beta$ annealing schedule (in which $\beta$ is increased linearly). In addition, a one-hour timeout was set in PBBM. Most instances were solved with this annealing schedule without any problems. For some instances for which the annealing schedule did not work, a trial was made with $\beta_{end}$ = 2.5, 4.0, 4.5, and 5.0. In addition, for some difficult instances that were not solved with R = 640 (in the case of GPU implementation) and R = 100 (CPU implementation), R was increased (the replica count was increased).

Tables 7 and 8 present measurement results of average TTS.

Table 7

| Instance | | | PBBMTTS | | OtherWorks | | | |
|----------|---|-------|---------|-----|-----|-----|-----|-------|
| # | N | $f_{prev}$ | GPU | CPU | MOH | GES | ITS | TSHEA |
| G1 | 800 | 11624 | 0.05 | 0.8 | 1.46 | 3.25 | 1.5 | 1.1 |
| G2 | 800 | 11620 | 0.05 | 2.14 | 4.61 | 8.04 | X | 4.7 |
| G3 | 800 | 11622 | 0.05 | 1.13 | 1.25 | 4.91 | X | 3.86 |
| G4 | 800 | 11646 | 0.1 | 3.59 | 5.23 | 7.83 | 1.77 | 5.2 |
| G5 | 800 | 11631 | 0.05 | 1.01 | 0.99 | 5.39 | 0.76 | 1.56 |
| G6 | 800 | 2178 | 0.04 | 1.19 | 3.03 | 5.76 | X | 1.32 |
| G7 | 800 | 2006 | 0.08 | 1.98 | 2.98 | 7.07 | X | 6.54 |
| G8 | 800 | 2005 | 0.07 | 2.65 | 5.72 | 12.15 | X | 8.71 |
| G9 | 800 | 2054 | 0.05 | 1.44 | 3.21 | 6.22 | X | 3.98 |
| G10 | 800 | 2000 | 0.12 | 22.11 | 68.09 | 10.84 | X | 16.54 |
| G11 | 800 | 564 | 0.07 | 4.47 | 0.22 | 0.98 | 0.12 | 1.22 |
| G12 | 800 | 556 | 0.06 | 4.06 | 3.52 | 1.53 | 0.56 | 4.03 |
| G13 | 800 | 582 | 0.07 | 5.67 | 0.85 | 1.39 | 4.52 | 12.83 |
| G14 | 800 | 3064 | 5.01 | 2330.47 | 251.27 | 337.0 | X | 399.0 |
| G15 | 800 | 3050 | 0.47 | 76.43 | 52.19 | 16.33 | 55.84 | 20.98 |
| G16 | 800 | 3052 | 0.2 | 36.22 | 93.68 | 18.91 | 32.82 | 18.84 |
| G17 | 800 | 3047 | 0.87 | 170.77 | 129.53 | 97.68 | 200.67 | 17.67 |

(continued)

| Instance | | | PBBMTTS | | OtherWorks | | | |
|---|---|---|---|---|---|---|---|---|
| # | N | $f_{prev}$ | GPU | CPU | MOH | GES | ITS | TSHEA |
| G18 | 800 | 992 | 0.83 | 380.26 | 112.65 | 127.4 | 14.5 | 8.36 |
| G19 | 800 | 906 | 0.23 | 4.76 | 266.92 | 17.1 | X | 13.31 |
| G20 | 800 | 941 | 0.07 | 1.36 | 43.71 | 1.59 | 1.52 | 3.08 |
| G21 | 800 | 931 | 0.73 | 78.51 | 155.34 | 6.79 | X | 15.98 |
| G22 | 2000 | 13359 | 1.09 | 242.6 | X | 92.6 | X | 77.62 |
| G23 | 2000 | 13344 | X | X | 433.79 | X | X | 423.37 |
| G24 | 2000 | 13337 | 0.69 | 58.71 | X | 391.13 | X | 355.75 |
| G25 | 2000 | 13340 | 2.6 | 430.11 | X | 306.81 | X | 518.51 |
| G26 | 2000 | 13328 | 19.53 | 1561.2 | X | X | X | 566.09 |
| G27 | 2000 | 3341 | 0.79 | 76.9 | 42.25 | 393.68 | X | 242.36 |
| G28 | 2000 | 3298 | 1.17 | 42.88 | 707.18 | 630.14 | 198.23 | 417.02 |
| G29 | 2000 | 3405 | 1.39 | 83.01 | X | 189.53 | X | 396.3 |

Table 8

| Instance | | | PBBMTTS | | OtherWorks | | | |
|---|---|---|---|---|---|---|---|---|
| # | N | $f_{prev}$ | GPU | CPU | MOH | GES | ITS | TSHEA |
| G30 | 2000 | 3413 | 1.62 | 366.71 | X | 140.97 | X | 397.76 |
| G31 | 2000 | 3310 | 1.65 | 450.31 | X | 336.01 | X | 699.45 |
| G32 | 2000 | 1410 | 1.69 | 805.64 | 65.75 | 46.38 | 425.7 | 81.5 |
| G33 | 2000 | 1382 | 3522 | X | X | 239.26 | 485.83 | 83.86 |
| G34 | 2000 | 1384 | 1.87 | 515.38 | 84.23 | 56.65 | 189.27 | 51.16 |
| G35 | 2000 | 7687 | 2928.85 | X | X | X | X | X |
| G36 | 2000 | 7680 | 127.73 | X | X | X | X | X |
| G37 | 2000 | 7691 | 63.69 | X | X | X | X | X |
| G38 | 2000 | 7688 | 5.0 | 751.31 | X | X | X | 922.66 |
| G39 | 2000 | 2408 | 3.4 | 655.32 | X | 191.86 | X | 681.56 |
| G40 | 2000 | 2400 | 45.09 | X | X | X | X | X |
| G41 | 2000 | 2405 | 2.8 | 484.62 | 377.35 | 43.45 | X | 551.15 |
| G42 | 2000 | 2481 | 131.16 | X | X | 212.21 | X | X |
| G43 | 1000 | 6660 | 0.08 | 3.18 | 1.15 | 18.61 | X | X |
| G44 | 1000 | 6650 | 0.08 | 1.87 | 5.28 | 10.89 | 2.09 | 1.99 |
| G45 | 1000 | 6654 | 0.11 | 3.95 | 6.87 | 62.29 | 3.99 | 4.23 |
| G46 | 1000 | 6649 | 0.17 | 4.96 | X | 27.68 | 30.12 | 10.71 |
| G47 | 1000 | 6657 | 0.17 | 4.67 | 43.25 | 26.52 | 4.88 | 3.39 |
| G48 | 3000 | 6000 | 0.03 | 0.846 | 0.02 | 0.05 | 0.97 | 0.08 |
| G49 | 3000 | 6000 | 0.04 | 3.06 | 0.03 | 0.16 | 1.57 | 0.14 |

(continued)

| Instance | | | PBBMTTS | | OtherWorks | | | |
|---|---|---|---|---|---|---|---|---|
| # | N | $f_{prev}$ | GPU | CPU | MOH | GES | ITS | TSHEA |
| G50 | 3000 | 5880 | 0.61 | 546.22 | X | 0.08 | 50.64 | 0.96 |
| G51 | 1000 | 3848 | 0.82 | 71.23 | 189.2 | 117.45 | X | 246.21 |
| G52 | 1000 | 3851 | 0.81 | 279.79 | 209.69 | 158.16 | 98.43 | 237.38 |
| G53 | 1000 | 3850 | 2.53 | 360.83 | X | X | 109.5 | X |
| G54 | 1000 | 3852 | 5.54 | 2672.31 | X | 329.19 | X | X |

In the case where a solver failed to obtain BKS of an instance in all 20 runs, the average TTS is undefined and is represented by "X."

As seen in Tables 7 and 8, the PBBM (GPU implementation) performed by the data processing apparatus 10 of the present embodiment significantly outperforms the other solvers in 51 out of 54 instances.

PBBM is a highly parallel algorithm and is designed for massively parallel hardware. Even in the case of the CPU implementation, PBBM outperforms all other solvers in 17 instances.

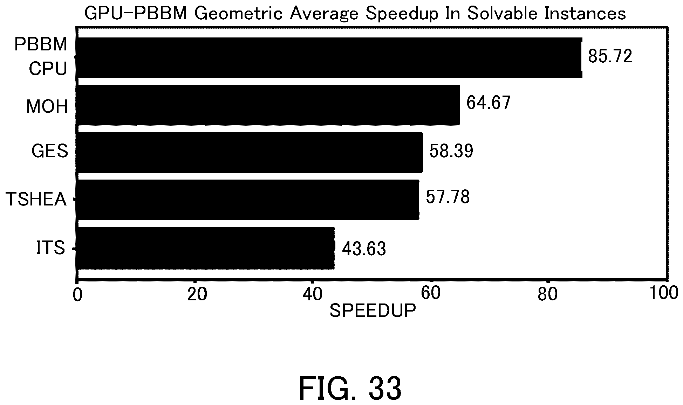

FIG. 33 illustrates calculation results for the speedup of PBBM (GPU implementation) against other solvers. The horizontal axis represents speedup (geometric average speedup in equation (26)), whereas the vertical axis indicates five solvers to be compared with PBBM (GPU implementation).

As seen in FIG. 33, PBBM (GPU implementation) achieves a speedup of at least 43 times over the other solvers.

In this connection, the measurement results of average TTS presented in Tables 7 and 8 depend greatly on the programming language used, compiler, coding skills, and others. To address this issue, the solvers are compared in terms of their average error. The average error of each solver is defined as equation (33).

$$\epsilon = \frac{1}{54} \sum_{i=1}^{54} \frac{f_{best-known}(G_i) - f_{avg(G_i)}}{f_{best-known}(G_i)} \qquad (33)$$

In equation (33), $f_{avg}(G_i)$ denotes the average cut value obtained in 20 runs for an instance $G_i$, and $f_{best-known}(G_i)$ denotes the BKS of the instance $G_i$.

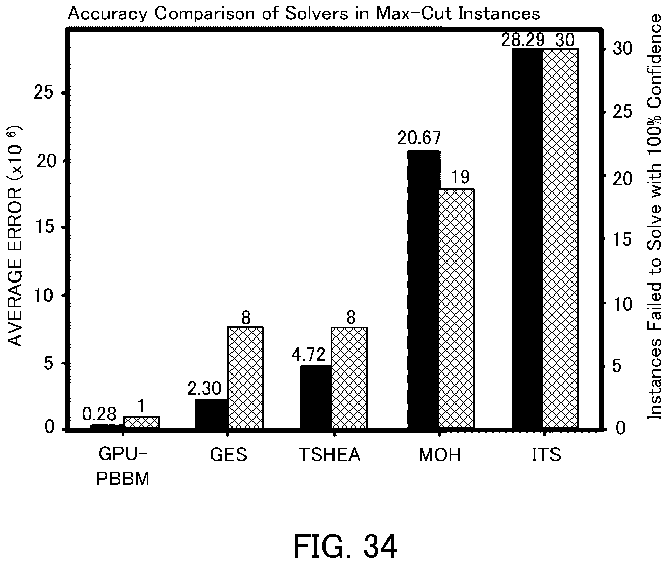

In addition, the solvers are compared in terms of the number of instances that were solved with 100% confidence, i.e., the number of instances in which $f_{best-known}(G_i) = f_{avg}(G_i)$. The comparison results are presented in FIG. 34.

FIG. 34 illustrates the comparison results of accuracy of type 1 solvers. The horizontal axis indicates five solvers, whereas the vertical axis on the left represents the average error over 54 instances, and the vertical axis on the right represents the number of instances in which the BKS was not obtained even once in 20 runs (the number of instances that were not solved with 100% confidence).

The left side bar in FIG. 34 represents the average error of each solver, and the right side bar represents the number of instances described above. PBBM (GPU implementation) were able to solve 53 out of 54 instances with 100% confidence, which is more than all other solvers. In addition, the average error of PBBM (GPU implementation) is approximately eight times less than that of the best of the other solvers, which demonstrates that PBBM is the most accurate solver. Since the type 2 solvers are all hardware-accelerated solvers, PBBM (GPU implementation) was used in this experimental example.

The average time and average obtained cut value to reach BKSs in 17 instances are reported for MARS, SB, and SA, which are type 2 solvers. For each instance, the number of MCMC iterations was set to a value that leads to a runtime equal to the minimum time among all other solvers. Each instance was run 10 times with R = 640, $\beta_{start}$ = 0.2, and $\beta_{end}$ = 3.5. The results of average time and average cut value are presented in Table 9.

Table 9

| Instance | | | Average Time(s) | | | | Average Cut Value | | | |
|---|---|---|---|---|---|---|---|---|---|---|
| # | N | $f_{prev}$ | PBBM | SB | SA | MARS | PBBM | SB | SA | MARS |
| G9 | 800 | 2054 | 0.05 | 0.07 | 0.17 | 0.08 | 2054 | 2013 | 2004 | 1969.70 |

(continued)

| Instance | | | Average Time(s) | | | | Average Cut Value | | | |
|---|---|---|---|---|---|---|---|---|---|---|
| # | N | $f_{prev}$ | PBBM | SB | SA | MARS | PBBM | SB | SA | MARS |
| G13 | 800 | 582 | 0.01 | 0.01 | 0.11 | 0.43 | 575.40 | 570.60 | 522 | 547.36 |
| G18 | 800 | 992 | 0.08 | 0.08 | 0.16 | 0.22 | 987.40 | 917.20 | 938 | 900.93 |
| G19 | 800 | 906 | 0.08 | 0.08 | 0.17 | 0.42 | 904.8 | 831 | 844 | 840.1 |
| G20 | 800 | 941 | 0.07 | 0.08 | 0.15 | 0.23 | 941 | 871.6 | 880 | 844.88 |
| G21 | 800 | 931 | 0.03 | 0.09 | 0.17 | 0.03 | 922.1 | 848.4 | 880 | 886.69 |
| G31 | 2000 | 3310 | 0.05 | 0.05 | 0.16 | 0.27 | 3260.10 | 3248 | 3227 | 3148.86 |
| G34 | 2000 | 1384 | 0.01 | 0.01 | 0.11 | 0.16 | 1202.60 | 1353.2 | 1191 | 1306.1 |
| G39 | 2000 | 2408 | 0.14 | 0.14 | 0.20 | 0.28 | 2360.50 | 2166.7 | 2269 | 2309.95 |
| G40 | 2000 | 2400 | 0.17 | 0.17 | 0.24 | 0.34 | 2356.20 | 2152.5 | 2267 | 2278.13 |
| G41 | 2000 | 2405 | 0.16 | 0.16 | 0.25 | 2.82 | 2358.60 | 2128.8 | 2284 | 2241.28 |
| G42 | 2000 | 2481 | 0.14 | 0.14 | 0.26 | 1.48 | 2437.20 | 2217 | 2325 | 2264.09 |
| G47 | 1000 | 6657 | 0.04 | 0.04 | 0.15 | 0.50 | 6637.70 | 6621.6 | 6619 | 6533.41 |
| G50 | 3000 | 5880 | 0.02 | 0.02 | 0.15 | 40.20 | 5264.60 | 5853.4 | 5803 | 5843.4 |
| G51 | 1000 | 3848 | 0.11 | 0.11 | 0.18 | 0.54 | 3844.40 | 3745 | 3754 | 3765.98 |
| G53 | 1000 | 3850 | 0.10 | 0.10 | 0.19 | 0.54 | 3844.80 | 3747.1 | 3756 | 3767.53 |
| G54 | 1000 | 3852 | 0.10 | 0.10 | 0.20 | 0.54 | 3845.60 | 3753.1 | 3756 | 3767.07 |

As seen in Table 9, PBBM achieves better average cut value than all other solvers in 15 out of 17 instances, even though PBBM took the minimum time in all instances.

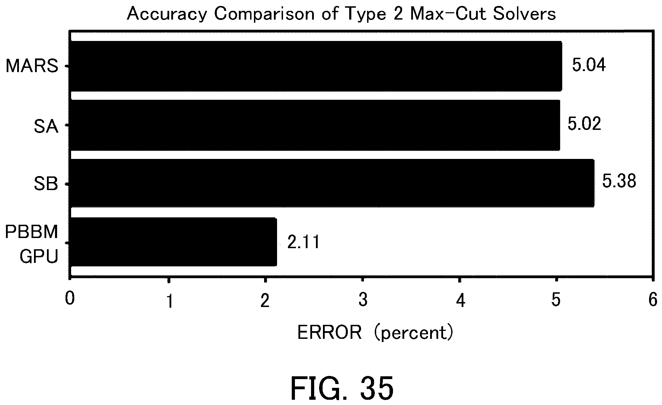

FIG. 35 illustrates comparison results of accuracy of type 2 solvers. The horizontal axis represents error (average error), whereas the vertical axis indicates four type 2 solvers.

As seen in FIG. 35, PBBM (GPU implementation) is the most accurate among the type 2 solvers and has approximately 2.5 times less error than the other solvers.

The description on the comparison results of performance between PBBM and the other solvers over various Max-Cut instances is now complete.

The above-described processing contents (for example, FIGS. 6, 7, 12, 19, 22, 23, and others) may be implemented in software by the data processing apparatus 10 of the present embodiment executing programs.

The programs may be stored in a computer-readable storage medium. Storage media include magnetic disks, optical discs, magneto-optical (MO) disks, semiconductor memories, and others, for example. The magnetic disks include flexible disks (FDs) and HDDs. The optical discs include compact discs (CDs), CD-recordable (CD-Rs), CD-rewritable (CD-RWs), digital versatile discs (DVDs), DVD-Rs, DVD-RWs, and others. The programs may be stored in portable storage media, which are then distributed. In this case, the programs may be copied from the portable storage media to other storage media and be then executed.

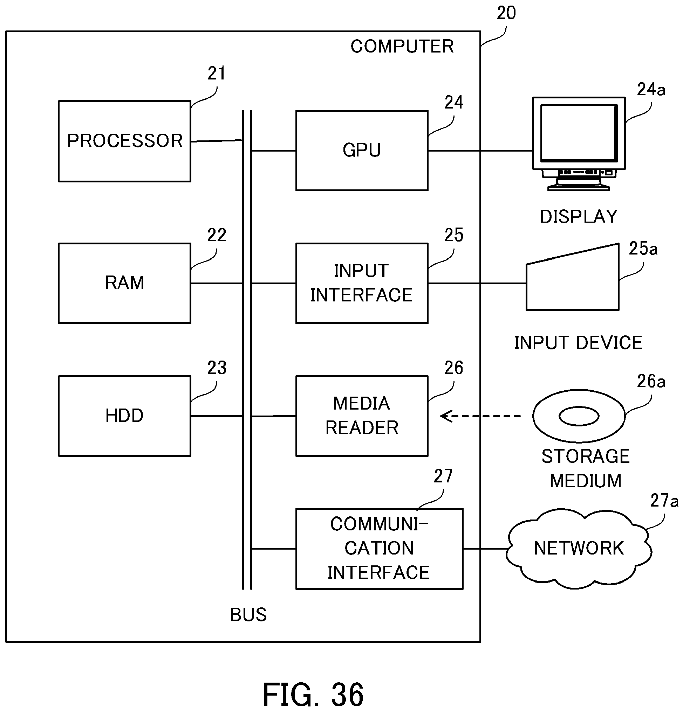

FIG. 36 illustrates an example of hardware of a computer that is an example of the data processing apparatus.

The computer 20 includes a processor 21, a RAM 22, an HDD 23, a GPU 24, an input interface 25, a media reader 26, and a communication interface 27. These units are connected to a bus.

The processor 21 functions as the processing unit 12 of FIG. 5. The processor 21 is a processor such as a GPU or CPU, including an operational circuit that executes program instructions and a storage circuit such as a cache memory. The processor 21 loads at least part of a program or data from the HDD 23 to the RAM 22 and executes the program. For example, the processor 21 may include a plurality of processor cores to run a plurality of replicas or a plurality of threads in parallel, as illustrated in FIG. 13. The computer 20 may include a plurality of processors. A set of multiple processors (multiprocessor) may be called a "processor."

The RAM 22 functions as the storage unit 11 of FIG. 5. The RAM 22 is a volatile semiconductor memory that temporarily stores therein a program to be executed by the processor 21 and data to be used by the processor 21 in processing. For example, the RAM 22 is an HBM or the like. The computer 20 may include another type of memory than the RAM 22 or include a plurality of memories.

The HDD 23 is a non-volatile storage device that holds software programs, such as operating system (OS), middleware, and application software, and data. For example, the programs include a program that causes the computer 20 to search for solutions to combinatorial optimization problems as described above. In this connection, the computer 20 may include another type of storage device such as a flash memory or a solid state drive (SSD), or may include a plurality of non-volatile storage devices.

The GPU 24 outputs images (for example, an image representing a search result of a solution to a combinatorial optimization problem) to a display 24a connected to the computer 20 in accordance with instructions from the processor 21. A cathode ray tube (CRT) display, a liquid crystal display (LCD), a plasma display panel (PDP), an organic electroluminescence (OEL) display, or the like may be used as the display 24a.

The input interface 25 receives an input signal from an input device 25a connected to the computer 20 and outputs it to the processor 21. A pointing device such as a mouse, a touch panel, a touch pad, or a track ball, a keyboard, a remote controller, a button switch, or the like may be used as the input device 25a. In addition, plural types of input devices may be connected to the computer 20.

The media reader 26 is a reading device that reads programs and data from a storage medium 26a. For example, a magnetic disk, optical disc, MO disk, semiconductor memory, or another may be used as the storage medium 26a. Magnetic disks include FDs and HDDs. Optical discs include CDs and DVDs.

For example, the media reader 26 copies a program and data read from the storage medium 26a to another storage medium such as the RAM 22 or the HDD 23. The program read is executed by the processor 21, for example. The storage medium 26a may be a portable storage medium and be used for distributing programs and data. The storage medium 26a and HDD 23 may be referred to as computer-readable storage media.

The communication interface 27 is connected to a network 27a to enable communication with other information processing apparatuses over the network 27a. The communication interface 27 may be a wired communication interface connected to a communication device such as a switch by a cable or a wireless communication interface connected to a base station by a wireless link.

One aspect of the computer program, data processing apparatus, and data processing method of the present disclosure has been described as the embodiment. This, however, is just an example, and is not limited to the above description.

According to one aspect, the present disclosure helps to reduce the computational cost in searching for a solution to a combinatorial optimization problem using a population annealing method.

**Claims**

1. A computer program that causes a computer to perform a process comprising:

   storing, in first storage means (11), values of a plurality of discrete variables included in an evaluation function of a Boltzmann machine to which a combinatorial optimization problem is transformed, and values of a plurality of local fields with respect to each of a plurality of replicas for the Boltzmann machine, the plurality of local fields each representing a change occurring in a value of the evaluation function when a value of one of the plurality of discrete variables is changed;
   storing, in second storage means (12b1 to 12bR) provided for each of the plurality of replicas, the values of the plurality of discrete variables and the values of the plurality of local fields with respect to the each of the plurality of replicas;
   repeating, for each of the plurality of replicas, an update process of updating a value of one of the plurality of discrete variables, the value of the evaluation function, and the values of the plurality of local fields, based on a set value of a temperature parameter and the values of the plurality of local fields stored in the second storage means; and
   each time a number of iterations of the update process reaches a predetermined value,
   performing a resampling process of a population annealing method, based on the values of the plurality of discrete variables of the plurality of replicas and values of the evaluation function of the plurality of replicas, and reading, in response to a second replica being created by duplicating a first replica among the plurality of replicas in the resampling process, the values of the plurality of discrete variables of the first replica and the values of the plurality of local fields of the first replica from the first storage means or the second storage means provided for the first replica, and storing the read values of the plurality of discrete variables and the read values of the plurality of local fields in the second storage means provided for the second replica.

2. The computer program according to claim 1, wherein the update process is performed by a plurality of replica processing means in parallel for the plurality of replicas.

**3.** The computer program according to claim 1, wherein

the process further includes detecting a set of discrete variables that are not coupled to each other, based on weight coefficients included in the evaluation function, the weight coefficients each representing an intensity of coupling between the plurality of discrete variables, and
the update process allows values of a plurality of first discrete variables included in the set of discrete variables to be updated in one iteration.

**4.** The computer program according to claim 1, wherein the update process includes

determining, in parallel, whether to accept a flip of a value of each of the plurality of discrete variables, and
flipping, upon determining to accept flips of values of a plurality of first discrete variables among the plurality of discrete variables, a value of a first discrete variable with an identification number that is smallest next to an identification number of a discrete variable whose value has been last flipped in the update process performed so far among the plurality of first discrete variables.

**5.** A data processing apparatus comprising:

first storage means (11) for holding values of a plurality of discrete variables included in an evaluation function of a Boltzmann machine to which a combinatorial optimization problem is transformed, and values of a plurality of local fields with respect to each of a plurality of replicas for the Boltzmann machine, the plurality of local fields each representing a change occurring in a value of the evaluation function when a value of one of the plurality of discrete variables is changed;
second storage means (12b1 to 12bR) that is provided for each of the plurality of replicas and holds the values of the plurality of discrete variables and the values of the plurality of local fields with respect to the each of the plurality of replicas; and
processing means (12) for performing a process including

repeating, for each of the plurality of replicas, an update process of updating a value of one of the plurality of discrete variables, the value of the evaluation function, and the values of the plurality of local fields, based on a set value of a temperature parameter and the values of the plurality of local fields stored in the second storage means, and
each time a number of iterations of the update process reaches a predetermined value,
performing a resampling process of a population annealing method, based on the values of the plurality of discrete variables of the plurality of replicas and values of the evaluation function of the plurality of replicas, and
reading, in response to a second replica being created by duplicating a first replica among the plurality of replicas in the resampling process, the values of the plurality of discrete variables of the first replica and the values of the plurality of local fields of the first replica from the first storage means or the second storage means provided for the first replica, and storing the read values of the plurality of discrete variables and the read values of the plurality of local fields in the second storage means provided for the second replica.

**6.** A data processing method executed by a computer, the data processing method comprising:

storing, in first storage means (11), values of a plurality of discrete variables included in an evaluation function of a Boltzmann machine to which a combinatorial optimization problem is transformed, and values of a plurality of local fields with respect to each of a plurality of replicas for the Boltzmann machine, the plurality of local fields each representing a change occurring in a value of the evaluation function when a value of one of the plurality of discrete variables is changed;
storing, in second storage means (12b1 to 12bR) provided for each of the plurality of replicas, the values of the plurality of discrete variables and the values of the plurality of local fields with respect to the each of the plurality of replicas;
repeating, for each of the plurality of replicas, an update process of updating a value of one of the plurality of discrete variables, the value of the evaluation function, and the values of the plurality of local fields, based on a set value of a temperature parameter and the values of the plurality of local fields stored in the second storage means; and
each time a number of iterations of the update process reaches a predetermined value,
performing a resampling process of a population annealing method, based on the values of the plurality of discrete variables of the plurality of replicas and values of the evaluation function of the plurality of replicas, and reading, in response to a second replica being created by duplicating a first replica among the plurality of replicas in the resampling process, the values of the plurality of discrete variables of the first replica and the values of the plurality of local fields of the first replica from the first storage means or the second storage means provided for the first replica, and storing the read values of the plurality of discrete variables and the read values of the plurality of local fields in the second storage means provided for the second replica.

FIG. 1A

FIG. 1B

FIG. 1C

FIG. 1D

FIG. 1E

FIG. 1F

## Algorithm 1 MCMC

**Input:** State $x \in \{0,1\}^N$, Energy $E$, Inverse Temperature $\beta \in \mathbb{R}$, $w \in \mathbb{R}^{N \times N}$, $b \in \mathbb{R}^N$

**Output:** $x, E$

1: $j \leftarrow$ propose_neuron()         $\triangleright$ Random or sequential
2: $\Delta E_j \leftarrow (2x_j - 1) \sum_{i=1}^{N} w_{ij} x_i$        $\triangleright$ Eq. $\boxed{5}$
3: $p_j \leftarrow \min\left\{1, e^{-\beta \Delta E_j}\right\}$        $\triangleright$ Eq. $\boxed{4}$
4: $r \leftarrow$ uniform_random$(0, 1)$
5: **if** $p_j > r$ **then**
6:      $x_j \leftarrow 1 - x_j$
7:      $E \leftarrow E + \Delta E_j$
8: **end if**
9: **return** $x, E$

# FIG. 2

---

**Algorithm 2** PA

---

**Input:** $w \in \mathbb{R}^{N \times N}$, $b \in \mathbb{R}^N$, $R \in \mathbb{N}$, $\beta_{start} \in \mathbb{R}$, $\beta_{end} \in \mathbb{R}$, $\theta \in \mathbb{N}$, $N_T \in \mathbb{N}$

**Output:** Samples $x \in \{0,1\}^{R \times N}$, Energies $E \in \mathbb{R}^R$

  1: $\beta \leftarrow \beta_{start}$

  2: $\Delta\beta \leftarrow \frac{\beta_{end} - \beta_{start}}{N_T - 1}$

  3: $R_\beta \leftarrow R$

  4: Randomly initialize $x$

  5: Calculate $E$ from Eq. $\boxed{1}$

  6: **for** $t = 1$ to $N_T$ **do**

  7:     **for all** $i = 1$ to $R_\beta$ **do in parallel**

  8:         **for** $u = 1$ to $\theta$ **do**

  9:             $\nabla$ Algorithm $\boxed{1}$

10:             $x^{(i)}, E^{(i)} \leftarrow \text{MCMC}(x^{(i)}, E^{(i)}, \beta, w, b)$

11:         **end for**

12:         $W^{(i)} = e^{-\Delta\beta E^{(i)}}$

13:     **end for**

14:     $\text{RESAMPLE}(x, E, W, R, \Delta\beta)$

15: **end for**

# FIG. 3

```
16: function RESAMPLE(x, E, W, R, Δβ)
17:     initialize x_new, E_new
18:     for i = 1 to R_β do in parallel
19:         τ^(i) ← ⌊R_β · W^(i) / Σ_{j=1}^{R_β} W^(i)⌋          ▷ Eq. 10 and Eq. 11
20:         if rand() > τ^(i) − c^(i) then c^(i) ← c^(i) + 1
21:     end for
22:     j ← 0
23:     for i = 1 to R_β do
24:         for t ← 1 to c^(i) do
25:             x_new^(j) ← x^(i), E_new^(j) ← E^(i)
26:             j ← j + 1
27:         end for
28:     end for
29:     x ← x_new, E ← E_new, β ← j
30:     β ← β + Δβ
31: end function
32: return x, E
```

# FIG. 4

10

DATA PROCESSING
APPARATUS

12

PROCESSING UNIT

12a1

REPLICA PROCESSING UNIT

12b1

$x^{(1)}, h^{(1)}$

12ai

REPLICA PROCESSING UNIT

12bi

$x^{(i)}, h^{(i)} \longrightarrow x^{(1)}, h^{(1)}$

12aR

REPLICA PROCESSING UNIT

12bR

$x^{(R)}, h^{(R)}$

11

STORAGE UNIT

**w**

$x^{(1)}, h^{(1)}, E^{(1)}$

$x^{(i)}, h^{(i)}, E^{(i)}$

$x^{(R)}, h^{(R)}, E^{(R)}$

# FIG. 5

START

SET PARAMETERS — S10

DETERMINE INITIAL
OPERATING PARAMETERS — S11

SET INITIAL STATE
(STORE IN EACH STORAGE
UNIT) — S12

TEMPERATURE LOOP
$t = 1 ; t < N_T ; t{+}{+}$ — S13

REPLICA LOOP
$i = 1 ; i < R_\beta ; i{+}{+}$ — S14

ITERATION LOOP
$u = 1 ; u < \theta ; u{+}{+}$ — S15

MCMC UPDATE PROCESS — S16

ITERATION LOOP — S17

CALCULATE EVALUATION
VALUE — S18

REPLICA LOOP — S19

RESAMPLING PROCESS — S20

TEMPERATURE LOOP — S21

END

# FIG. 6

RESAMPLING

REPLICA LOOP
$i = 1 ; i < R_\beta ; i++$　　S30

CALCULATE $\tau^{(i)}, c^{(i)}$　　S31

rand() $> \tau^{(i)} - c^{(i)}$?　　S32

NO

YES

$c^{(i)} \leftarrow c^{(i)} + 1$　　S33

REPLICA LOOP　　S34

INITIALIZE $x_{new}, E_{new}, h_{new}$
$j \leftarrow 0$　　S35

REPLICA LOOP
$i = 1 ; i < R_\beta ; i++$　　S36

DUPLICATION LOOP
$t = 1 ; t < c^{(i)} ; t++$　　S37

DUPLICATE REPLICA
$x^{(j)}_{new} \leftarrow x^{(i)}, E^{(j)}_{new} \leftarrow E^{(i)},$
$h^{(j)}_{new} \leftarrow h^{(i)}$　　S38

$j \leftarrow j+1$　　S39

DUPLICATION LOOP　　S40

REPLICA LOOP　　S41

VARIABLE SUBSTITUTION
(STORE IN EACH STORAGE UNIT)
$x \leftarrow x_{new}, E \leftarrow E_{new}, h \leftarrow h_{new}$　　S42

UPDATE INVERSE TEMPERATURE
$\beta \leftarrow \beta + \Delta \beta$　　S43

RETURN

FIG. 7

FIG. 8

FIG. 9

---

**Algorithm 3** Sequential Selection MCMC

---

**Input:** State $x \in \{0,1\}^N$, Energy $E$, Inverse Temperature $\beta \in \mathbb{R}$, $w \in \mathbb{R}^{N \times N}$, $b \in \mathbb{R}^N$, Index of Last Updated Neuron $k \in \mathbb{N}$

**Output:** $x, E$

1:  **for** $i = 1$ to $N$ **do in parallel**
2:  $\quad \Delta E_i = (2x_i - 1) \sum_{u=1}^{N} w_{iu} x_u$ $\qquad\qquad \triangleright$ Eq. $\boxed{5}$
3:  $\quad p_i = \min\{1, e^{-\beta \Delta E_i}\}$ $\qquad\qquad\qquad \triangleright$ Eq. $\boxed{4}$
4:  $\quad r = \mathrm{uniform\_random}(0, 1)$
5:  $\quad f_i = 2N + 1$
6:  $\quad$ **if** $p_i > r$ **then**
7:  $\quad\quad$ **if** $i > k$ **then**
8:  $\quad\quad\quad f_i = i$
9:  $\quad\quad$ **else**
10: $\quad\quad\quad f_i = i + N$
11: $\quad\quad$ **end if**
12: $\quad$ **end if**
13: **end for**
14: $j = \mathrm{minimum\_reduction\_tree}(f)$
15: **if** $f_j < 2N + 1$ **then**
16: $\quad x_j \leftarrow 1 - x_j$
17: $\quad E \leftarrow E + \Delta E_j$
18: **end if**
19: **return** $x, E$

---

# FIG. 10

FIG. 11

START

TRIAL LOOP
i = 1 ; i < N ; i++  —— S50

CALCULATE $\Delta E_i$  —— S51

CALCULATE $p_i$  —— S52

INITIALIZE FLAG VALUE
$f_i = 2N+1$  —— S53

S54

$p_i > r$?  — NO

YES

S55

$i > k$?  — NO

YES — S56

$f_i = i$

S57

$f_i = i + N$

TRIAL LOOP  —— S58

DETERMINE $x_j$ TO BE UPDATED,
USING PARALLEL MINIMUM
REDUCTION TREE
j = (IDENTIFICATION NUMBER
FOR MINIMUM $f_i$)  —— S59

S60

$f_i < 2N+1$?  — NO

YES

UPDATE PROCESS  —— S61

END

FIG. 12

FIG. 13

FIG. 14

FIG. 15A    FIG. 15B    FIG. 15C

EP 4 163 842 A1

FIG. 16

FIG. 17

---

**Algorithm 4 Graph Coloring Preprocessing**

---

**Input:** Preprocessing Weights $\hat{w} \in \mathbb{R}^{N \times N}$, Preprocessing
    Biases $\hat{b} \in \mathbb{R}^{N}$, Fraction of Neurons to Color $f \in [0,1]$

**Output:** Colors $c \in \mathbb{N}^{N}$

  1: $k \leftarrow 0$

  2: **while** $k < fN$ **do**

  3:      $\text{PA}(\hat{w},\hat{b},640,0.5,4,\theta,N_T)$

  4:      **for** $i = 1$ to $N$ **do in parallel**

  5:          $b_i \leftarrow Pr_i$

  6:          $k \leftarrow k + r_i$

  7:      **end for**

  8:      $P \leftarrow P + 1$

  9: **end while**

10: **for** $i = 1$ to $N$ **do**

11:      **if** $b_i = -1$ **then**

12:          $b_i \leftarrow P$

13:          $P \leftarrow P + 1$

14:      **end if**

15: **end for**

16: $c \leftarrow b - P$

17: **return** $c$

---

FIG. 18

CLUSTERING

GENERATE GRAPH COLORING PROBLEM — S70

$k \leftarrow 0$ — S71

S72
NO — $k < fN$?
YES

PERFORM PA — S73

PROBLEM UPDATE LOOP
$i=1; i<N; i++$ — S74

$b_i \leftarrow P x_i, k \leftarrow k+x_i$ — S75

PROBLEM UPDATE LOOP — S76

$P \leftarrow P+1$ — S77

POSTPROCESSING LOOP
$i=1; i<N; i++$ — S78

S79
NO — $b_i = -1$?
YES

$b_i \leftarrow P, P \leftarrow P+1$ — S80

POSTPROCESSING LOOP — S81

OBTAIN COLORING RESULT
$c \leftarrow b - P$ — S82

END

FIG. 19

(WEIGHT COEFFICIENT MATRIX
BEFORE CLUSTERING)

● Non-zero
○ Zero

FIG. 20A

(WEIGHT COEFFICIENT MATRIX AFTER CLUSTERING)

FIG. 20B

---

**Algorithm 5** Clustered Sequential Selection MCMC

---

**Input:** State $x \in \{0,1\}^N$, Energy $E$, Inverse Temperature $\beta \in \mathbb{R}$, $w \in \mathbb{R}^{N \times N}$, $b \in \mathbb{R}^N$, Clusters $C_1, C_2, ..., C_m$, Index of Last Updated Cluster $k \in \mathbb{N}$

**Output:** $x$, $E$

  1:  **for** $i = 1$ to $N$ **do in parallel**

  2:      $\Delta E_i = (2x_i - 1)\sum_{u=1}^{N} w_{iu}x_u$               ▷ Eq. 5

  3:      $p_i = \min\{1, e^{-\beta \Delta E_i}\}$                  ▷ Eq. 4

  4:      $r = \text{uniform\_random}(0,1)$

  5:      $f_i = 2N + 1$

  6:      **if** $p_i > r$ **then**

  7:          **if** $i > k$ **then**

  8:             $f_i = i$

  9:          **else**

10:             $f_i = i + N$

11:          **end if**

12:      **end if**

13:  **end for**

14:  $j = \text{minimum\_reduction\_tree}(f)$

15:  $p = \text{cluster\_idx}(x_j)$    ▷ index of the $j$th neuron's cluster

16:  **for** $x_i$ in $C_p$ **do in parallel**

17:      **if** $i \geq j$ **and** $f_i < 2N + 1$ **then**

18:          $x_i \leftarrow 1 - x_i$

19:          $E \leftarrow E + \Delta E_i$

20:      **end if**

21:  **end for**

22:  **return** $x$, $E$

---

# FIG. 21

START

CLUSTERING — S90

PARALLEL TRIAL — S91

DETERMINE $x_j$ TO BE UPDATED, USING PARALLEL MINIMUM REDUCTION TREE
j = (IDENTIFICATION NUMBER FOR MINIMUM $f_i$) — S92

OBTAIN IDENTIFICATION NUMBER p OF CLUSTER TO WHICH DISCRETE VARIABLE TO BE FLIPPED BELONGS — S93

INTRA-CLUSTER PARALLEL UPDATE PROCESS — S94

END

FIG. 22

INTRA-CLUSTER PARALLEL
UPDATE PROCESS

INTRA-CLUSTER LOOP
$i=j;\ i<j+N_p;\ i++$ — S100

NO $\leftarrow$ $f_i<2N+1?$ — S101

YES

UPDATE PROCESS — S102

INTRA-CLUSTER LOOP — S103

END

# FIG. 23

FIG. 24

QAP esc32a with 1024 Neurons

FIG. 25

PT with Population Size of 2560

FIG. 26

Max-Cut G33, 2000 Neurons

FIG. 27

FIG. 28

FIG. 29

**Algorithm 1 Parallel PBBM Algorithm**

---

**Input:** $w \in \mathbb{R}^{N \times N}$, $b \in \mathbb{R}^N$, $R \in \mathbb{N}$, $\beta_{start} \in \mathbb{R}$, $\beta_{end} \in \mathbb{R}$, $\theta \in \mathbb{N}$, $N_T \in \mathbb{N}$

**Output:** Lowest energy found $\hat{E}$ and its state $\hat{x} \in \{0,1\}^N$

1: $\beta \leftarrow \beta_{start}$, $\Delta\beta \leftarrow \frac{\beta_{end} - \beta_{start}}{N_T - 1}$, $R_\beta \leftarrow R$, $\hat{E} \leftarrow 0$, $\hat{x} \leftarrow 0$
2: Randomly initialize $x$, Calculate $E, h$ from Eq. 2,5
3: **for** $t = 1$ to $N_T$ **do**
4:      **for all** $i = 1$ to $R_\beta$ **do in parallel**
5:          **for** $u = 1$ to $\theta$ **do**
6:              $\nabla$ Parallel Trial Phase
7:              **for all** $j = 1$ to $N$ **do in parallel**
8:                  $\Delta E_j^{(i)} \leftarrow (2x_j^{(i)} - 1)h_j^{(i)}$
9:                  $a_j^{(i)} \leftarrow \min\{1, e^{-\beta \Delta E_j^{(i)}}\}$
10:                 $f_j^{(i)} = 1$ if $a_j^{(i)} > \text{rand}()$ else $f_j^{(i)} = 0$
11:              **end for**
12:              $k \leftarrow \text{Parallel\_Reduction}(f^{(i)})$
13:              $\nabla$ Parallel Local Field Calculation Phase
14:              **if** $k$ **then**
15:                  $x_k^{(i)} \leftarrow 1 - x_k^{(i)}$, $E^{(i)} \leftarrow E^{(i)} + \Delta E_k^{(i)}$
16:                  **for all** $j = 1$ to $N$ **do in parallel**
17:                      $h_j^{(i)} \leftarrow \sum_{v=1}^{N} w_{jv} x_v^{(i)}$
18:                  **end for**
19:              **end if**
20:              **if** $E^{(i)} < \hat{E}$ **then** $\hat{E} \leftarrow E^{(i)}$, $\hat{x} \leftarrow x^{(i)}$
21:          **end for**
22:          $W^{(i)} = e^{-\Delta\beta E^{(i)}}$
23:      **end for**
24:      $\nabla$ PA Resampling Phase
25:      **initialize** $x_{new}, h_{new}, E_{new}$
26:      **for** $i = 1$ to $R_\beta$ **do in parallel**
27:          $\tau^{(i)} \leftarrow R_\beta \frac{W^{(i)}}{\sum_{j=1}^{R_\beta} W^{(i)}}$
28:          $c^{(i)} \leftarrow \lfloor \tau^{(i)} \rfloor$
29:          **if** $\text{rand}() > \tau^{(i)} - c^{(i)}$ **then** $c^{(i)} \leftarrow c^{(i)} + 1$
30:      **end for**
31:      $j \leftarrow 0$
32:      **for** $i = 1$ to $R_\beta$ **do**
33:          **for** $t = 1$ to $c^{(i)}$ **do**
34:              $x_{new}^{(j)} \leftarrow x^{(i)}$, $h_{new}^{(j)} \leftarrow h^{(i)}$, $E_{new}^{(j)} \leftarrow E^{(i)}$
35:              $j \leftarrow j + 1$
36:          **end for**
37:      **end for**
38:      $x \leftarrow x_{new}$, $h \leftarrow h_{new}$, $E \leftarrow E_{new}$, $\beta \leftarrow j$
39:      $\beta \leftarrow \beta + \Delta\beta$
40: **end for**
41: **return** $\hat{E}, \hat{x}$

---

FIG. 30

FIG. 31

FIG. 32

GPU–PBBM Geometric Average Speedup In Solvable Instances

FIG. 33

Accuracy Comparison of Solvers in Max-Cut Instances

FIG. 34

Accuracy Comparison of Type 2 Max-Cut Solvers

FIG. 35

20

COMPUTER

21
PROCESSOR

24
GPU

24a
DISPLAY

22
RAM

25
INPUT
INTERFACE

25a
INPUT DEVICE

23
HDD

26
MEDIA
READER

26a
STORAGE
MEDIUM

27
COMMUNI-
CATION
INTERFACE

27a
NETWORK

BUS

FIG. 36

Europäisches Patentamt

European Patent Office

Office européen des brevets

# EUROPEAN SEARCH REPORT

Application Number

EP 22 19 9988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mousavi Seyed Farzad ET AL: "A GPU-Accelerated Population-Based Boltzmann Machine for Solving Combinatorial Optimization Problems", , 1 November 2020 (2020-11-01), XP055928043, ISBN: 979-8-6985-5437-0 Retrieved from the Internet: URL:https://tspace.library.utoronto.ca/bit stream/1807/108524/1/Mousavi_Seyed_Farzad_ 202011_MAS_thesis.pdf [retrieved on 2022-06-03] * Algorithm 1, Sections 2.3, 2.4, 2.6, 2.8.2, 2.9, 4.1, 4.3.1, 4.3.2, 5.3, 5.4, 5.4.2; figures 4.2, 4.3 * ----- | 1-6 | INV. G06N20/00 G06N3/044 |
| A | WANG WENLONG ET AL: "Comparing Monte Carlo methods for finding ground states of Ising spin glasses: Population annealing, simulated annealing, and parallel tempering", PHYSICAL REVIEW E (STATISTICAL, NONLINEAR, AND SOFT MATTER PHYSICS), [Online] vol. 92, no. 1, 6 July 2015 (2015-07-06), XP093026062, US ISSN: 1539-3755, DOI: 10.1103/PhysRevE.92.013303 Retrieved from the Internet: URL:https://journals.aps.org/pre/pdf/10.11 03/PhysRevE.92.013303> [retrieved on 2023-02-22] * the whole document * ----- | 1-6 | TECHNICAL FIELDS SEARCHED (IPC) G06N |

The present search report has been drawn up for all claims

| Place of search | Date of completion of the search | Examiner |
|---|---|---|
| Munich | 23 February 2023 | Winkelbauer, Andreas |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. ARAMON et al.** Physics-inspired optimization for quadratic unconstrained problems using a digital annealer. *Frontiers in Physics,* 2019, vol. 7
- A permutational Boltzmann machine with parallel tempering for solving combinatorial optimization problems. **M. BAGHERBEIK et al.** International Conference on Parallel Problem Solving from Nature. Springer, 2020, 317-331
- **S. KIRKPATRICK ; C. D. GELATT ; M. P. VECCHI.** Optimization by simulated annealing. *Science,* 1983, vol. 220 (4598), 671-680
- **R. M. NEAL.** Annealed importance sampling. *Statistics and Computing,* 2001, vol. 11 (2), 125-139
- **K. HUKUSHIMA ; K. NEMOTO.** Exchange Monte Carlo method and application to spin glass simulations. *Journal of the Physical Society of Japan,* 1996, vol. 65 (6), 1604-1608
- **K. HUKUSHIMA ; Y. IBA.** Population annealing and its application to a spin glass. *AIP Conference Proceedings,* 2003, vol. 690 (1), 200-206
- **W. WANG ; J. MACHTA ; H. KATZGRABER.** Comparing Monte Carlo methods for finding ground states of Ising spin glasses: Population annealing, simulated annealing, and parallel tempering. *Physical Review E,* 2015, vol. 92, 12
- **L. Y. BARASH et al.** GPU accelerated population annealing algorithm. *Computer Physics Communications,* 2017, vol. 220, 341-350
- **K. DABIRI et al.** Replica exchange MCMC hardware with automatic temperature selection and parallel trial. *IEEE Transactions on Parallel and Distributed Systems,* 2020, vol. 31 (7), 1681-1692
- **J. S. ROSENTHAL et al.** Jump Markov chains and rejection-free metropolis algorithms. *arXiv:1910.13316,* 2020
- **ANDREW LUCAS.** Ising formulations of many NP problems. *Frontiers in Physics,* February 2014, vol. 2
- **R. REN ; G. ORKOULAS.** Acceleration of markov chain monte carlo simulations through sequential updating. *The Journal of Chemical Physics,* 2006, vol. 124 (6), 064109
- **A. BARZEGAR et al.** Optimization of population annealing monte carlo for large-scale spin-glass simulations. *Phys. Rev. E,* November 2018, vol. 98, 053308

- **Y. YE.** *Gset Max-Cut Library,* 28 June 2022, https://web.stanford.edu/~yyye/yyye/Gset/>
- **M. HARRIS.** Optimizing Parallel Reduction in CUDA. *NVIDIA Developer Technology,* 2007
- **FUDA MA ; JIN-KAO HAO.** A multiple search operator heuristic for the max-k-cut problem. *Annals of Operations Research,* 2017, vol. 248 (1), 365-403
- **V. P. SHYLO ; O. V. SHYLO ; V. À. ROSCHYN.** Solving weighted max-cut problem by global equilibrium search. *Cybernetics and Systems Analysis,* vol. 48 (4), 563-567
- **FUDA MA ; JIN-KAO HAO ; YANG WANG.** An effective iterated tabu search for the maximum bisection problem. *Computers and Operations Research,* 2017, vol. 81, 78-89
- **QINGHUA WU ; YANG WANG ; ZHIPENG LÜ.** A tabu search based hybrid evolutionary algorithm for the max-cut problem. *Applied Soft Computing,* 2015, vol. 34, 827-837
- **RAINER E. BURKARD ; STEFAN E. KARISCH ; FRANZ RENDL.** QAPLIB -a quadratic assignment problem library. *Journal of Global Optimization,* 1997, vol. 10 (4), 391-403
- **FUDA MA ; JIN-KAO HAO ; YANG WANG.** An effective iterated tabu search for the maximum bisection problem. *Computers Operations Research,* 2017, vol. 81, 78-89
- **V. P. SHYLO ; O. V. SHYLO ; V. À. ROSCHYN.** Solving weighted max-cut problem by global equilibrium search. *Cybernetics and Systems Analysis,* July 2012, vol. 48 (4), 563-567
- **A. YAVORSKY et al.** Highly parallel algorithm for the Ising ground state searching problem. *arXiv:1907.05124v2,* 16 July 2019
- **YU ZOU ; MINGJIE LIN.** Massively simulating adiabatic bifurcations with FPGA to solve combinatorial optimization. *FPGA '20: Proceeding of the 2020 ACM/SIGDA International Symposium on Field-Programmable Gate Arrays,* February 2020
- **CHASE COOK et al.** GPU-based Ising computing for solving max-cut combinatorial optimization problems. *Integration, the VLSI Journal,* 2019, vol. 69, 335-344